# EUROPEAN PATENT APPLICATION

(11) **EP 2 270 670 A1**
(43) Date of publication of application: **05.01.2011**
(21) Application number: 10713812.5
(22) Date of filing: 17.03.2010
(51) Int. Cl.: G06F 13/00

(54) **WEB SYSTEM, COMMAND TARGET SYSTEM, AND CONTENT DATA PROVIDING METHOD**

(30) Priority: 17.03.2009 JP 2009064195
(71) Applicant: CyberStation, Inc., Kanazawa-shi, Ishikawa 920-8203 (JP); I-O Data Device, Inc., Kanazawa-shi Ishikawa 920-8512 (JP)
(72) Inventor: MURAI Masanori, Ishikawa 920-0334 (JP)
(74) Representative: Grebner, Christian Georg Rudolf
(86) International application number: PCT/JP2010/054555
(87) International publication number: WO 2010/107062

(57) **Abstract**

The object is to provide a Web system A1 which enables a client B1 to eliminate the use of an application for instruction-receiving system even in an environment in which direct control from the Web system A1 to the instruction-receiving system C1 cannot be made and which makes an operation of transferring data from the instruction-receiving system C1 easy. The Web system is equipped with a receiving device 110 having a function to receive specification information for specifying the instruction-receiving system C1 from a Web browser 200 of the client B1 and a function to receive a processing request from the Web browser 200, an acquisition device 111 for acquiring contents data corresponding to the processing request from a contents data memory portion D10, an edit device 112 for editing the contents data in contents data containing processing instructions to send instructions corresponding to the processing request to the instruction-receiving system C1 specified by the specification information, and a send device for sending the contents data to the Web browser B1.

## Description

### Technical Field:

The present invention relates to a Web system provided with a Web server connectable to a client via a network for giving operating instructions to equipment connected to the client (instruction-receiving system), to the instruction-receiving system connected to the client and to a contents data providing method realized by the Web server.

### Background Art:

In recent years, a client has been used as connecting thereto various kinds of equipment, including printers, faxes, scanners and memories (hereinafter referred to as the instruction-receiving system), which operate upon receipt of processing instructions from the clients. In order for the client to request the instruction-receiving system to proceed with processing, the client has a dedicated application, such as a driver, installed therein and requests processing using the dedicated application.

In order to display a list of files stored in a combined machine connected to a network, for example, a signal for instructions to request the file list is sent to the combined machine using the dedicated application of the client. The combined machine replies to the client on file list information in accordance with the instructions. In addition, in the case of output-requesting a printer or fax, output instructions are sent from the client to the printer etc. using a dedicated application. The printer or fax outputs data in accordance with the output instructions.

### Prior Art Document:

### Patent Document:

On the other hand, Patent Document 1 shown below relates to an image-forming apparatus utilizing hardware resources including scanners and memories and discloses a technology not requiring a client to have an application. The image-forming apparatus is provided with a Web server, receives a processing request from the client and calls for a Web service function in response to the processing request to control the scanner etc. and send a processing response showing processing results to the client.
Patent Document 1: JP 2007-129766 A

Patent Document 2 shown below discloses a technology of sending command generation data from a command generation server to a client and sending a command from the client to equipment to be operated. Upon receipt of the command generation data, the client causes a command generation portion to generate a command on the basis of the command generation data and send the command to the equipment to be operated.
Patent Document 2: WO/2008/018553

### Brief Summary of the Invention:

### Problems the Invention intends to solve:

However, in the technology of Patent Document 1 above, the hardware resources including the scanners and scanners are built in the image-forming apparatus, and the scanners etc. are directly controlled by a control system, such as a Web server. On the other hand, as regards a fax or memory not having the function of the image-forming apparatus, it is conceivable that use of an application is also eliminated through the steps of providing a separate Web server and applying the technique of Patent Document 1 to the separate server. In the case of connecting the fax or memory and the Web server to different networks, however, there is a case where direct control from the Web server to the fax or memory cannot be attained from the standpoint of a unidirectional communication environment, such as NAT. In the unidirectional communication environment, if the above technology should be applied to the Web server, instructions from the Web server cannot be accepted to the fax or memory to make the realization thereof impossible. In addition, Web pages including blogs have actively been laid open in recent years, and the establishment of a technology for easily updating the Web pages has been demanded. In such image-forming apparatus of Patent Document 1 provided with the memory, demands for uploading the contents data stored in the memory to the published Web server are increasing. In the case of uploading the contents data from the image-forming apparatus to the published Web server, however, a user is required to perform operations of sending a processing request for acquiring contents data for update from a Web browser to the image-forming apparatus, once storing the contents data received as a processing response thereto in the client and thereafter uploading the contents data onto the published server. In the case of uploading plural contents data in particular, the operations have to be performed again and again. This is very cumbersome. Furthermore, in the technology of Patent Document 2 above, the command generation portion generates a command based on the command generation data, and a command-sending portion sends the command. However, such function is generally realized by the use of a dedicated application to equipment to be operated. For this reason, the technology entails the problems of inducing a time-consuming step of installing a dedicated application to each client and failing to operate the equipment to be operated from a client to which the dedicated application is not installed.

In view of the above, the present invention (first invention) has as an object thereof to provide a Web system which eliminates the need for an application for an instruction-receiving system in a client even in a connection environment in which direct control from a Web server to the instruction-receiving system including a fax, a memory, etc. cannot be attained and which makes transfer of data from the instruction-receiving system easy; provide the instruction-receiving system; and provide a contents data providing method realized using the Web system. An object of the present invention (second invention) is to provide a Web system which eliminates the use of an application for an instruction-receiving system in a client even in a connection environment in which direct control from a Web server to the instruction-receiving system including a fax, a memory, etc. cannot be attained and which makes it possible to operate the instruction-receiving system even in the absence of a dedicated application.

### Means for solving the Problems:

A Web system according to the first invention is provided with a Web server connectable to a Web browser of a client via a network and adapted to send contents data to the Web browser in accordance with a processing request from the Web browser; the contents data being a program file in which instructions for causing the Web browser to execute prescribed processing are described; the Web server comprising receiving means having a function to receive specification information for specifying an instruction-receiving system from the Web browser and a function to receive a processing request from the Web browser, acquisition means having a function to acquire contents data corresponding to the processing request from a contents data memory portion, edit means having a function to edit the contents data into contents data containing processing instructions to send instructions corresponding to the processing request to the instruction-receiving system specified by the specification information, and send means for sending the contents data to the Web browser, wherein the processing instructions contained in the contents data edited by the edit means are executed on the Web browser as processing of accessing the instruction-receiving system and reading contents.

In addition, a contents data providing method of the present invention causes a Web server connectable to a Web browser of a client via a network to send contents data in accordance with a processing request from the Web browser; the contents data being a program file in which instructions for causing the Web browser to execute prescribed processing are described; the Web server comprising a step of receiving specification information for specifying an instruction-receiving system from the Web browser, a step of receiving a processing request from the Web browser, an acquisition step of acquiring contents data corresponding to the processing request from a contents data memory portion, an edit step of editing the contents data into contents data containing processing instructions to send instructions corresponding to the processing request to the instruction-receiving system specified by the specification information, and a send step of sending the contents data to the Web browser, wherein the processing instructions contained in the contents data edited at the edit step are executed on the Web browser as processing of accessing the instruction-receiving system and reading contents.

According to this invention, the specification information specifying the instruction-receiving system is sent from the Web browser to the Web server, the Web server having received a processing request sent acquires from the contents data memory portion the contents data corresponding to the processing request by/at the acquisition means/step edits the contents data by/at the edit means/step and sends the edited contents data to the Web browser. The edited contents data contains the processing instructions to send the instructions corresponding to the processing request to the instruction-receiving system specified by the specification information. On the client having received the edited contents data, the instructions are sent to the instruction-receiving system in accordance with the processing instructions and the instructions are executed in the instruction-receiving system. Incidentally, the instruction-receiving system may send the processing results to the Web browser, Web system or any other equipment and, furthermore, the processing results may not be sent thereto from the instruction-receiving system. In addition, the specification information and processing request may be received simultaneously or at different timings.

The processing request is a processing request requesting a file list in a specified directory, and the edit means preferably edits the contents data acquired by the acquisition means into the contents data containing the processing instructions to be sent to the instruction-receiving system in which the instructions to request the file list in the specified information are specified by the specified information.

According to this invention, when the directory in the instruction-receiving system is specified to request the file list from the Web browser to the Web server, the Web server uses the edit means to edit the contents data acquired by the acquisition means. The edited contents data contains the processing instructions for sending instructions requesting the file list in the specified directory to the instruction-receiving system specified by the specification information. In the Web browser having received the edited contents data, the instructions requesting the file list in the specified directory are sent to the instruction-receiving system and the instruction-receiving system executes the instructions to send the file list in the specified directory to the Web browser.

The processing request is a processing request for requesting transfer of a specified file to a specified forwarding destination, and the edit means preferably edits the contents data acquired by the acquisition means into contents data containing processing instructions to send instructions to request the transfer of the specified file to the specified forwarding destination to the instruction-receiving system specified by the specification information.

According to this invention, when requesting the transfer of the specified file to the specified forwarding destination from the Web browser to the Web server, the Web server uses the edit means to edit the contents data acquired by the acquisition means. The edited contents data contains processing instructions to send the instructions to transfer the specified file to the specified forwarding destination to the instruction-receiving system specified by the specification information. In the Web browser having received the edited contents data, the instructions to transfer the specified file to the specified forwarding destination are sent to the instruction-receiving system and the instruction-receiving system executes transfer of the specified file to the specified forwarding destination.

The Web system is provided with a license information memory portion in which a user identifier, specification information specifying the instruction-receiving system and an identifier for authentication capable of uniquely determining the instruction-receiving system specified by the specification information are stored as being mapped, the receiving means has a function to receive the user identifier from the Web browser and a function to receive an authentication request from the Web browser, the acquisition means has a function to acquire contents data corresponding to the authentication request from the contents data memory portion, and the edit means preferably has a function to acquire specification information corresponding to the user identifier and an identifier for authentication from the license information memory portion and to edit the contents data acquired by the acquisition means into contents data containing processing instructions to send authentication instructions using the identifier for authentication to the instruction-receiving system specified by the specification information.

According to this invention, when sending the user identifier and authentication request from the Web browser, the edit means of the Web server acquires specification information corresponding to the user identifier received from the Web browser and an identifier for authentication and edits the contents data acquired by the acquisition means to send the edited contents data to the Web browser. The edited contents data contains processing instructions to send the authentication instructions using the identifier for authentication to the instruction-receiving system specified by the specification information. In the Web browser having received the edited contents data, the authentication instructions using the identifier for authentication are sent to the instruction-receiving system. Incidentally, the user identifier and authentication request may be received simultaneously or at different timings.

In addition, the instruction-receiving system is preferably provided with a instruction memory portion in which instructions corresponding to instructions received from the Web browser are stored and instruction execution means for selecting, when having received instructions corresponding to the processing request from the Web browser, instructions corresponding to the instructions from the instruction memory portion and executing the selected instructions.

According to this invention, the instructions corresponding to the instructions received from the Web browser are selected and executed. As a result, the instructions corresponding to the processing instructions from the Web browser are executed.

The instruction-receiving system is preferably provided with an identifier-for-authentication memory portion in which the identifier for authentication is stored and crosscheck means for crosschecking, when having received authentication instructions using the identifier for authentication from the Web browser, the received identifier for authentication and an identifier for authentication in the identifier-for-authentication memory portion.

According to this invention, the instruction-receiving system crosschecks, when receiving the authentication request from the Web browser, the identifier for authentication contained in the authentication request and the identifier for authentication in the identifier-for-authentication memory portion. As a result, the reliability of communication from the Web server can be confirmed in the instruction-receiving system via the Web browser.

The Web server is provided with a license information memory portion in which a user identifier and specification information specifying the instruction-receiving system are stored as being mapped, a session identifier production memory means having a session identifier memory portion in which a session identifier uniquely produced relative to a session with the Web browser is stored and crosscheck means for crosschecking, when having received the session identifier from the instruction-receiving system, the session identifier and the session identifier stored in the session identifier memory portion; the receiving means has a function to receive the user identifier from the Web browser and a function to receive the authentication request from the Web browser; the acquisition means has a function to acquire contents data corresponding to the authentication request from the contents data memory portion; and the edit means preferably acquires specification information corresponding to the user identifier from the license information memory portion and edits the contents data acquired from the acquisition means into contents data that contains procession instructions to send, to the instruction-receiving system specified by the specification information, a session identifier produced by the session identifier production memory means and return instructions to return the session identifier to the Web server.

According to this invention, the edited contents data sent from the Web server to the Web browser contains the processing instructions to send the session identifier and return instructions to the instruction-receiving system specified by the specification information. The return instructions are instructions to return the session identifier to the Web server. The Web browser having received the instructions sends the session identifier to the instruction-receiving system and, at the same time, sends the return instructions to return the session identifier to the Web server. In the instruction-receiving system having received the session identifier, the received session identifier is returned to the Web server. The Web server uses, when receiving the session identifier returned from the instruction-receiving system, the crosscheck means to crosscheck the received session identifier and the session identifier stored in the session identifier memory portion. As a result, it is possible in the Web server to perform authentication to confirm the reliability of communications made via the instruction-receiving system from the Web browser.

A Web system according to the second invention comprises a client provided with a Web browser, a first server and a second server capable of being in communication with the first server and the client; the first server comprises registration acceptance means for accepting registration of registration information including specification information for specifying an instruction-receiving system, contents data generation means for generating contents data containing processing instructions to send instructions to the instruction-receiving system specified by the specification information contained in the registration information and send means for sending the contents data generated by the contents data generation means to the second server; the second server comprises a contents data memory portion for storing the contents data received from the first server and send means for sending the contents data to the client on a request from the client; the contents data is a program file in which instructions for causing the Web browser to execute prescribed processing are described; and the processing instructions contained in the contents data are executed on the Web browser as processing for accessing the instruction-receiving system and reading contents in the system.

A Web system according to the second invention comprises a client provided with a Web browser, a first server and a second server capable of being in communication with the first server and the client; the first server comprises registration acceptance means for accepting registration of registration information including specification information for specifying an instruction-receiving system and send means for sending the registration information accepted by the registration acceptance means to the second server; the second server comprises a registration information memory portion for storing the registration information received from the first server, contents data generation means for generating contents data containing processing instructions to send instructions to the instruction-receiving system specified by the specification information included in the registration information and send means for sending the contents data to the client on a request from the client; the contents data is a program file in which instructions for causing the Web browser to execute prescribed processing are described; and the processing instructions contained in the contents data are executed on the Web browser as processing for accessing the instruction-receiving system and reading contents in the system.

A Web system according to the second invention comprises a server and a client capable of being in communication with the server; the server comprises registration acceptance means for accepting registration of registration information including specification information for specifying an instruction-receiving system, contents data generation means for generating contents data containing processing instructions to send instructions to the instruction-receiving system specified by the specification information included in the registration information and send means for sending the contents data generated by the contents data generation means to the client; the client comprises a contents data memory portion for storing the contents data received from the server and a Web browser; the contents data is a program file in which instructions for causing the Web browser to execute prescribed processing are described; and the processing instructions contained in the contents data are executed on the Web browser as processing for accessing the instruction-receiving system and reading contents in the system.

A Web system according to the second invention comprises a server capable of being in communication with a client provided with a Web browser; the server comprises registration acceptance means for accepting specification information for specifying an instruction-receiving system and registration information including instructions to be sent to the instruction-receiving system, contents data generation means for generating contents data containing processing instructions to send the instructions to the instruction-receiving system specified by the specification information contained in the registration information and send means for sending the contents data to the client on a request from the client; the contents data is a program file in which instructions for causing the Web browser to execute prescribed processing are described; and the processing instructions contained in the contents data are executed on the Web browser as processing for accessing the instruction-receiving system and reading contents in the system.

According to the second invention, the server produces contents data based on the registered registration information, and the contents data is sent to the client. The contents data is a program file in which the instructions to cause the Web browser to execute prescribed processing are described and, since the processing instructions contained in the contents data are executed on the Web browser as the processing for accessing the instruction-receiving system and reading the contents therein, the client execute the processing instructions contained in the contents data on the Web browser when receiving the contents data. As a result, the instructions are sent from the client to the instruction-receiving system specified by the specification information.

### Effects of the Invention:

According to the first invention, since the edited contents data sent from the Web system to the Web browser contains intended processing instructions relative to an intended instruction-receiving system, upon receiving the contents data, the Web browser can send instructions to the instruction-receiving system. As a result, even in a connection environment in which a direct control from the Web server to the instruction-receiving system cannot be made, a control from the Web server via the Web browser becomes possible to enable the client to eliminate the use of an application for the instruction-receiving system even in the connection environment. In addition, even in the case of transferring an intended file from the instruction-receiving system to an intended forwarding destination, since the corresponding transfer instructions are contained in the contents data, upon receiving the contents data, the Web browser can transfer the intended file from the instruction-receiving system directly to the intended forwarding destination. As a result, the conventional cumbersome operation of the user moving a file from the instruction-receiving system to the client and then from the client to the forwarding destination can be eliminated. Even in updating the contents data to the published Web server, since the contents data can be transferred from the instruction-receiving system that is a file source directly to the published Web server that is a forwarding destination, an updating operation can be made greatly easy.

According to the second inventions, since the contents data sent from the server to the client contains intended processing instructions relative to the intended instruction-receiving system, upon receiving the contents data, the client can execute the instructions relative to the instruction-receiving system. As a result, even in a connection environment in which a direct control from the server to the instruction-receiving system cannot be made, a control from the server via the client can be made, and the client can eliminate the use of an application for the instruction-receiving system even in the connection environment. In addition, the contents data is the program file in which instructions for causing the Web browser to execute prescribed processing are described, and the processing instructions contained in the contents data are executed on the Web browser as processing for accessing the instruction-receiving system and reading the contents therein. That is to say, the client having the Web browser mounted thereon analyzes the contents data on the Web browser and secondarily requests the contents in the instruction-receiving system, resulting in that the contents request processing is actually transmitted as command transmission relative to the instruction-receiving system. Thus, the provision of functions to analyze and request contents in browsing processing of a Web browser *per se* makes it possible to send a command to the instruction-receiving system. As a result, the client can eliminate the use of a dedicated application and, only by connecting various electronic equipment each having a Web browser mounted thereon to the server, execute processing instructions relative to the instruction-receiving system.

### Brief Description of the Drawings:

Figure 1 is a function configuration diagram illustrating the first embodiment of the present invention

Figure 2 is a flowchart illustrating the performance of the above embodiment.

Figure 3 is a function configuration diagram illustrating one example of each of acquisition means, edit means and contents data memory portion of the above embodiment.

Figure 4 an explanatory view functionally illustrating instruction execution means of the above embodiment.

Figure 5A is an explanatory view illustrating a file list request, Figure 5B an explanatory view illustrating a file transfer request, Figure 5C an explanatory view illustrating a backup request, Figure 5D an explanatory view illustrating a printout request and Figure 5E an explanatory view illustrating a control for external equipment.

Figure 6 is a function configuration diagram illustrating the second embodiment of the present invention.

Figure 7 is a flowchart illustrating the performance of the above embodiment.

Figure 8 is a function configuration diagram illustrating the third embodiment of the present invention.

Figure 9 is a flowchart illustrating the performance of the above embodiment.

Figure 10 is an explanatory view illustrating a network connection state of the present working example.

Figure 11 is a flowchart illustrating initial registration of the above working example.

Figure 12 is a flowchart 1 illustrating authentication processing of the above working example.

Figure 13 is a flowchart 2 illustrating authentication processing of the above working example.

Figure 14 is a flowchart 2 illustrating file list acquisition processing of the above working example.

Figure 15 includes diagrams showing examples of contents data before and after edit in file list acquisition of the above working example.

Figure 16 is a diagram showing an example of instructions selected in the file list acquisition of the above working example.

Figure 17 is a flowchart illustrating file transfer processing of the above working example.

Figure 18 includes diagrams showing examples of contents data before and after edit in file transfer processing of the above working example.

Figure 19 is a function configuration diagram illustrating the fourth embodiment of the present invention.

Figure 20 is a flowchart illustrating the performance of the fourth embodiment.

Figure 21 is an explanatory view illustrating Example 1 of contents data generation means.

Figure 22 is an explanatory view illustrating Example 2 of the contents data generation means.

Figure 23 is an explanatory view functionally illustrating instruction execution means.

Figure 24A is an explanatory view illustrating a file list request, Figure 24B an explanatory view illustrating a file transfer request, Figure 24C an explanatory view illustrating a backup request, Figure 24D an explanatory view illustrating a printout request and Figure 24E an explanatory view illustrating a control relative to external equipment.

Figure 25 is a function configuration diagram illustrating the fifth embodiment of the present invention.

Figure 26 is a flowchart illustrating the performance of the above embodiment.

Figure 27 is a function configuration diagram illustrating the sixth embodiment of the present invention.

Figure 28 is a flowchart illustrating the performance of the above embodiment.

Figure 29 is a function configuration diagram illustrating the seventh embodiment of the present invention.

Figure 30 is a flowchart illustrating the performance of the above embodiment.

Figure 31 includes a data example and a program-mounting example illustrating Working Example 1.

Figure 32 includes a data example and a program-mounting example illustrating Working Example 2.

### Mode for carrying out the Invention:

### (First Embodiment)

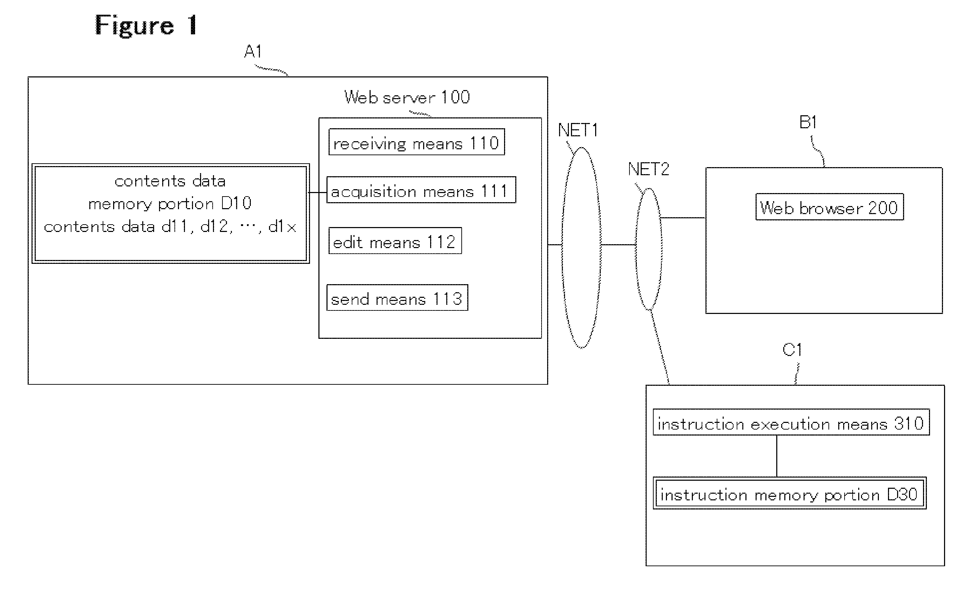

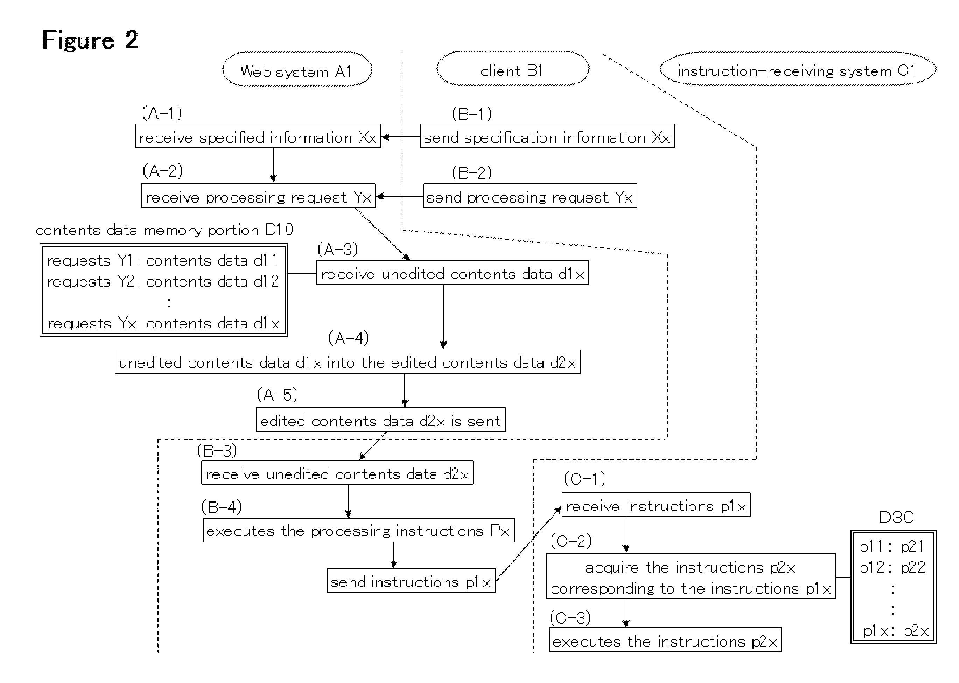

Figure 1 is a function configuration diagram illustrating the first embodiment of the present invention and Figure 2 is a flowchart illustrating the performance of the present embodiment. A Web system A1 is connected to a network NET2 via a network NET1, and a client B1 and an instruction-receiving system C1 are connected to the network NET2. The network NET1 is a global area network including the Internet, for example, and the network NET2 is a local area network which includes a private LAN and, in relation to a unidirectional communication environment, such as NAT (Network Address Translation), which can request processing from the client B1 to the Web system A1 or instruction-receiving system C1 while no direct control from the Web system A1 to the instruction-receiving system C1 can be attained.

The Web system A1 is provided with a Web server 100 and a contents data memory portion D10 connected to the Web server 100. The contents data memory portion D10 is materialized in the form of a memory, such as a hard disc, and has plural contents data d11, d12, ..., d1x stored therein. The contents data is a program file in which instructions to cause the Web browser when having received the contents data to execute prescribed processing are described, such as an HTML file, for example. The contents data d11, ..., d1x can be mapped to processing requests Y1, ..., Yx, respectively. In the case where each processing request is received as a request of the contents data specified in a URL, for example, it is mapped as contents data specified in the URL.

The Web server 100 is materialized in the form of a computer system provided with communication functions including a CPU, a memory, a hard disc, a network I/O, etc., has a function to answer processing results in reply to a processing request from a Web browser 200 of the client B1 and is provided with receiving means 110, acquisition means 111, edit means 112 and send means 113. Incidentally, the processing request from the Web browser 200 may be produced either through entry by a user or by the Web browser 200 on a background thereof.

The receiving means 110 has a function to receive specified information Xx from the Web browser 200 and a function to receive a processing request Yx from the Web browser 200. The specified information Xx is information capable of directly or indirectly specify the instruction-receiving system, for example. The information capable of directly specifying the instruction-receiving system includes IP addresses or server names (local host names or FQDNs), for example. The information capable of indirectly specifying the instruction-receiving system includes identifiers stored in relation to the IP addresses or server names, such as user identifiers. In the case of pre-registration of the user identifiers and IP addresses or server names (local host names or FQDNs) of the instruction-receiving system as preprocessing, a memory portion of the Web system 1 stores the user identifiers and the IP addresses or server names of the instruction-receiving system as being mapped. When having received a user identifier, the Web server 100 can identify the IP address or server name stored as being mapped to the user identifier. Incidentally, the IP address or server name may constitute information capable of identifying the instruction-receiving system C1 from at least the client B1, such as a private IP address or local host name.

The processing request Yx constitutes instructions to request processing from the Web browser 200 to the Web server 100. The processing request Yx may be produced through entry to the Web browser 200 by a user or automatically produced by the Web browser 200 on a background thereof. The former case includes instructions to cause the instruction-receiving system to execute acquisition of a file list from a specified directory or transfer of a specified file to a specified forwarding destination, for example, and the latter case includes, when an updated file or fresh file is stored in a prescribed memory, instructions to backup the file in a prescribed destination to save. The processing request Yx is materialized in the form of instructions to selectively request the contents data d1x stored in the Web system A1, such as a URL specifying a file corresponding to the processing request, for example, and added with additive information as occasion demands. The additive information includes information for specifying a directory in the case of file list acquisition, information for specifying a file in the case of file transfer and information for specifying a destination to save in the case of a backup request. The additive information is entered by a user using the Web browser 200 or produced in accordance with the prescribed rules. The acquisition means has a function to acquire from the contents data memory portion D10 the contents data d1x corresponding to the processing request Yx the receiving means 110 has received. The edit means 112 has a function to edit the contents data acquired by the receiving means 111 (hereinafter referred to as the unedited contents data d1x) into the contents data containing processing instructions Px to send instructions p1x to the instruction-receiving system specified by the specification information Xx (hereinafter referred to as the edited contents data d2x).

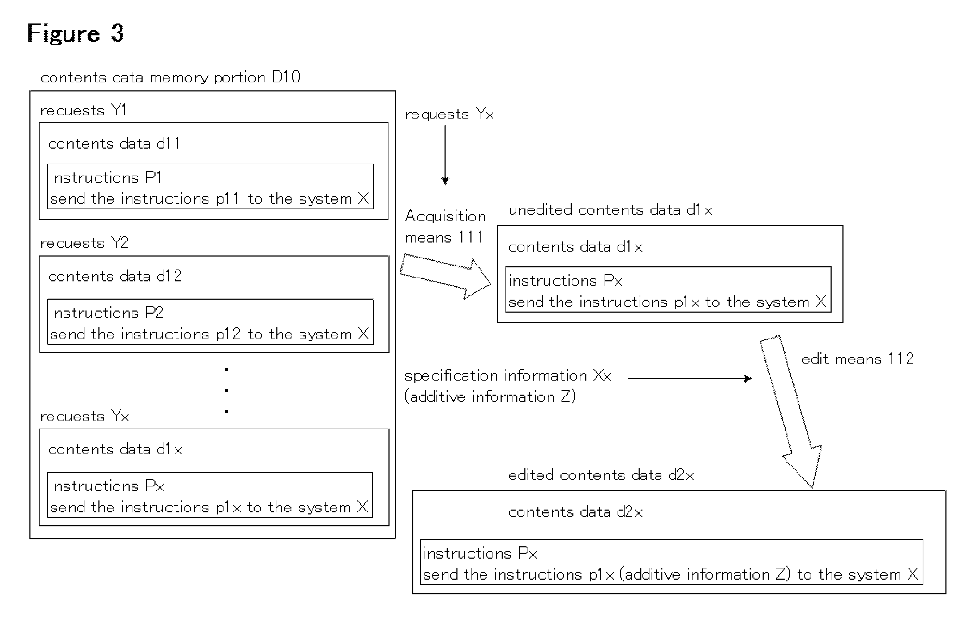

Figure 3 is a function explanatory view illustrating one example of each of acquisition means 111, edit means 112 and contents data memory portion D10. For example, the unedited contents data d1x contains processing instructions Px to send prescribed instructions p1x to the instruction-receiving system specified by optional specification information *X.* The acquisition means 111 acquires the unedited contents data d1x corresponding to the received processing request Yx. The edit means 112 converts an instruction-receiving system specified by optional specification information *X* into the instruction-receiving system C1 specified by the received specification information Xx. When the processing request Yx contains additive information *Z*, the additive information *Z* is added to the instructions p1x in accordance with the rules.

In more detail, when instructions p1x to initiate a prescribed program, specification information *X* showing an optional instruction-receiving system and instructions to send instructions p1x to the instruction-receiving system specified by the specification information *X* are contained as processing instructions Px in the unedited contents data d1x, for example, the edit means 112 converts the specification information *X* showing the optional instruction-receiving system based on the received specification information Xx and adds the additive information *X* to the instructions p1 x as a parameter to the program to obtain the edited contents data d2x.

At this time, when the specification information Xx is an IP address or server name of the instruction-receiving system, the optional specification information *X* in the processing instructions Px is converted into the IP address or server name. In addition, when the specification information Xx is an identifier stored as being mapped to the IP address or server name (user identifier, for example), the identifier and the corresponding IP address or server name of the instruction-receiving system are pre-registered in the memory portion, the IP address or server name corresponding to the received identifier is acquired from the memory portion, and the optional specification information *X* in the processing instructions Px is converted into the IP address or server name.

Incidentally, the edit means 112 is not limited to the above edit means and, for example, in the case where the unedited contents data contains optional instructions p and optional specification information *X* and where instructions p1x is stored in a memory region as being mapped to each processing request Yx, the edit means 112 may convert the specification information *X* based on the received specification information Xx and, at the same time, acquire instructions p1x corresponding to the received processing request Yx from the memory region and convert the optional instructions p of the unedited contents data into the acquired instructions p1x.

The send means 113 has a function to send the edited contents data d2x edited by the edit means 112 to the Web browser 200.

The client B1 comprises a personal computer equipped with a CPU, memory, hard disc, communication function, display, keyboard and mouse and is equipped with the Web browser 200. When receiving the edited contents data (HTML file etc.) d2x from the Web server 100, the Web browser 200 executes processing in accordance with the instructions (program) described in the edited contents data d2x. The processing includes processing instructions relative to the instruction-receiving system C1, image display onto a display, processing requests relative to other servers and other ordinary processing the Web browser can execute.

The instruction-receiving system C1 comprises hardware connected so that it may be controlled from the client B1. The instruction-receiving system C1 is equipped with a computer system having a CPU and memory region. In addition, the instruction-receiving system C1 can be connected to hardware, such as a printer, scanner, fax, etc. or may have these devices built therein as hardware resources.

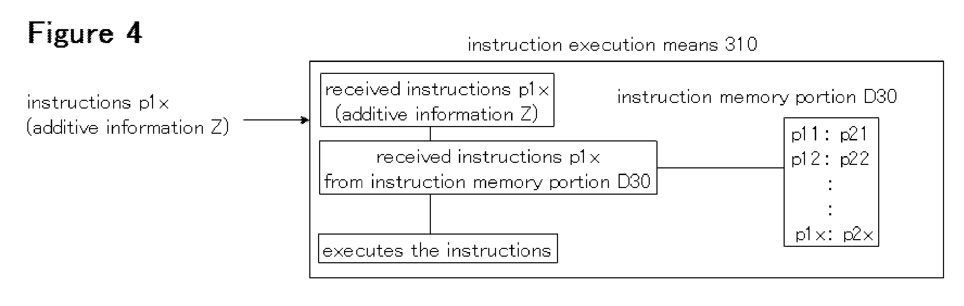

The instruction-receiving system C1 is equipped with instruction execution means 310 for executing the instructions p1x received from the Web browser 200. Figure 4 is an explanatory view functionally illustrating instruction execution means 310. The instruction-receiving system C1 has a memory region, such as hard disc, provided therein with an instruction memory portion D30. In the instruction memory portion D30, instructions p21, ..., p2x that can be mapped to the instructions p11, ..., p1 x received from the Web browser 200 are stored. The instruction execution means 310 acquires the instructions p2x corresponding to the received instructions p1x from the instruction memory portion D30 and executes the same. In the case where the additive information *Z* is added to the received instructions p1x, the instructions p2x having the additive information *Z* incorporated therein in accordance with the predetermined rules are executed.

For example, programs p21, ..., p2x are stored as the instructions p21, ..., p2x in the instruction memory portion D30. When receiving the instructions p1x from the Web browser 200, the instruction execution means 310 selects the program p2x specified by the instructions p1x from the instruction memory portion D30, incorporates the additive information *Z* added to the received instructions p1x as a parameter, and executes the program p2x. The programs p21, ..., p2x are stored in the instruction-receiving system C1 as functions, procedures or API. Incidentally, the instruction execution means 310 is not limited to the above instruction execution means, but will suffice insofar as it can execute the received instructions.

### (Explanation of Performance)

The explanation of the performance will be described hereinafter. A user receives an entry screen on the Web browser 200 of the client B1 from the Web system A1, enters the specification information Xx that is sent to the Web system A1, and enters an intended processing request Yx that is sent to the Web system A1. From the Web browser 200 to the Web system A1, the specification information Xx is sent (B-1) and the processing request Yx is sent (B-2). The specification information Xx and processing request Yx may be sent simultaneously or at different timings. When the specification information Xx and processing request Yx are sent at the different timings, the two are associated with each other with the client B1 and a session identifier uniquely produced by a session of the Web system A1.

The Web server 100 of the Web system A1 receives the specification information Xx (A-1) and processing request Yx (A-2) using the receiving means 110. The acquisition means 111 receives unedited contents data d1x corresponding to the processing request Yx from the contents data memory portion D10 (A-3). The edit means 112 edits the unedited contents data d1x into the edited contents data d2x (A-4). The edited contents data d2x comes to contain the processing instructions Px to send the instructions p1x corresponding to the processing instructions Yx to the instruction-receiving system C1 specified by the specification information Xx. In the presence of the additive information *Z*, the additive information *Z* is added to the instructions p1x in accordance with the rules. The edited contents data d2x is sent to the Web browser 200 using the send means 113 (A-5).

Here, an example of the processing by the edit means 112 (A-4) is shown. The unedited contents data d1x contains the processing instructions Px to send the prescribed instructions p1x to the instruction-receiving system specified by optional specification information *X*. The edit means 112 edits the optional specification information *X* based on the received specification information Xx. When the specification information Xx is an IP address or server name, the optional specification information X is converted into the IP address or server name and, when the specification information Xx is a pre-registered identifier, the identifier is converted into the IP address or server name stored as being mapped to the identifier.

When receiving the unedited contents data d2x (B-3), the Web browser 200 executes the processing instructions Px contained therein and sends the instructions p1x to the instruction-receiving system C1 specified by the specification information Xx (B-4).

When receiving the instructions p1x from the Web browser 200 (C-1), the instruction-receiving system C1 causes the instruction execution means 310 to acquire the instructions p2x corresponding to the instructions p1x from the instruction memory portion D30 (C-2) and executes the instructions p2x (C-3). When the additive information *Z* is added to the instructions p1x, the instruction execution means 310 executes the instructions p2x in a state in which the additive information *Z* has been incorporated into the instructions p2x.

The instructions to be executed are not limited insofar as the instruction-receiving system C1 can execute the instructions. For example, the instructions may aim at executing the processing only with the instruction-receiving system C1, controlling other equipment connected to the instruction-receiving system C1, returning processing results to the Web browser 200, sending the processing results to the specified destination, and not returning the processing results to any of the two. Concrete examples thereof will be described hereinafter.

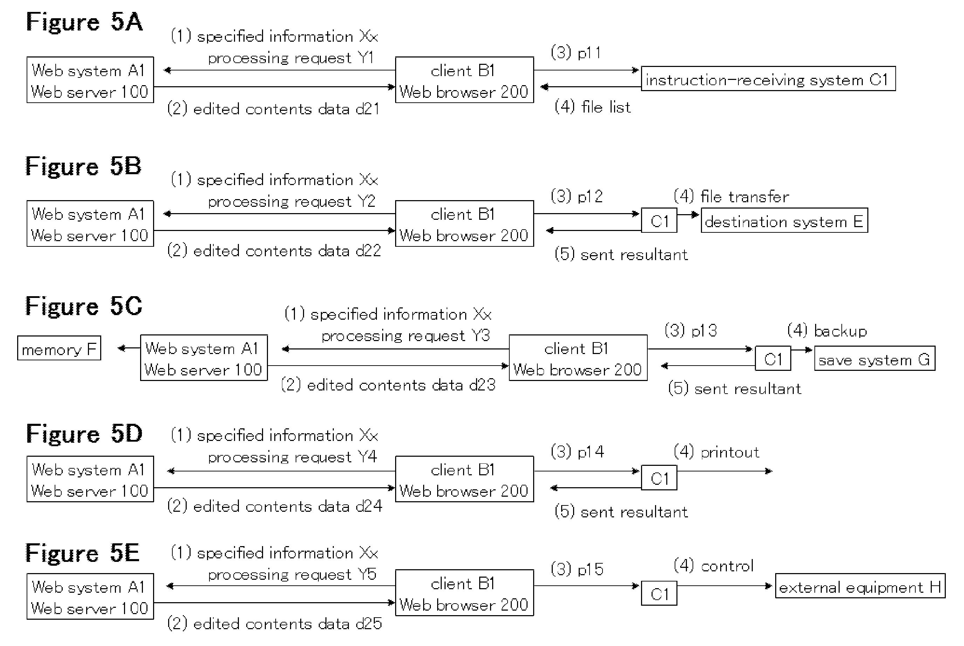

(Example 1: File List Request) Figure 5A is an explanatory view illustrating a file list request. When a user enters the specification information Xx on the Web browser, the specification information Xx is sent to the Web system A1. In addition, the user specifies the directory of a reference destination as the processing request Y1 and requests a file list of the directory, the processing request Y1 is sent to the Web browser 200 ((1) in the figure). The Web server 100 having received it acquires the unedited contents data d11 corresponding to the processing request Y1 in the file list. The unedited contents data d11 contains processing instructions P1 to send the instructions p11 requesting the file list to the instruction-receiving system specified by the optional specification information *X*. The edit means 112 converts the optional specification information *X* on the basis of the specification information Xx and adds additive information Z1 to the instructions p11. An edited contents data d21 is sent by the send means 113 ((2) in the figure). The additive information is the information Z1 for specifying the directory of the reference destination. When receiving the edited contents data d21, the Web browser 200 executes the processing instructions P1. As a result, the instructions p11 added with the additive information Z1 is sent to the instruction-receiving system C1 specified by the specification information Xx ((3) in the figure). In the instruction-receiving system C1, the instruction execution means 310 selects the instructions p21 corresponding to the instructions p11 and executes the instructions p21 having the additive information Z1 incorporated therein. The instructions p21 are the instructions to prepare a file list in the directory specified by the additive information Z1 and return it to the Web browser. As a result, the file list is prepared in the instruction-receiving system C1 and returned to the Web browser 200 ((4) in the figure).

(Example 2: File Transfer Request) Figure 5B is an explanatory view illustrating a file transfer request. When a user inters the specification information Xx, the Web browser causes the specification information Xx to be sent to the Web server 100. In addition, when the user enters information for specifying a file and a forwarding destination and enters a processing request Y2 to request the transfer of the file to a forwarding destination system *E*, the Web browser 200 sends the processing request Y2 to the Web server 100 ((1) in the figure). The Web server 100 having received it acquires unedited contents data d12 corresponding to the processing request Y2 in the forwarding destination. The unedited contents data d12 contains processing instructions P2 for sending file-transfer-requesting instructions p12 to the instruction-receiving system specified by the optional specification information X. The edit means 112 edits the optional specification information X into the unedited contents data d12 based on the specification information Xx and adds additive information Z2 and Z3. The additive information Z2 is information for specifying a file, the additive information Z3 is information for specifying the forwarding destination, and these pieces of information are acquired from the received processing request Y2. The edited contents data d22 are sent by the send means 113 ((2) in the figure). When receiving the edited contents data d22 from the send means 113, the Web browser 200 executes processing in accordance with the same, adds the additive information Z2 and Z3 to the instructions p12, and sends the resultant to the instruction-receiving system specified by the specification information Xx ((3) in the figure). In the instruction-receiving system C1, the instruction execution means 310 selects instructions p22 corresponding to the instructions p12 from the instruction memory portion D30 and execute the instructions p22 having the additive information Z2 and Z3 incorporated therein. The instructions p22 are instructions for causing the instruction-receiving system C1 to transfer a file specified by the additive information Z2 to the forwarding destination system *E* and sending a resultant value back to the Web browser. As a result, the file transfer to the forwarding destination system is executed in the instruction-receiving system C1 ((4) in the figure), and a success/unsuccess signal is sent as the resultant value to the Web browser 200 ((5) in the figure).

(Example 3: Backup Request) Figure 5C is an explanatory view illustrating a backup request. When a user enters the specification information Xx on the Web browser 200, the Web browser 200 causes the specification information Xx to be sent to the Web server 100 ((1) in the figure). In addition, the Web browser 200 sends to the Web server 100 a file confirmation-processing request Y3 for confirming whether an updated or added file exists in a prescribed memory *F* on the basis of triggers periodically produced on the background thereof. Incidentally, the prescribed memory *F* is beforehand specified by the user and stored in the Web browser 200. When having received it, the Web server 100 confirms whether the updated or added file exists in the prescribed memory *F* and, in the case of the presence thereof, causes the acquisition means to acquire unedited contents data d13 corresponding to the processing request Y3. The unedited contents data d13 contains processing instructions P3 to send instructions p13 for requesting a file to be saved in the destination to save to the instruction-receiving system specified by the optional specification information *X.* The edit means 112 converts the optional specification information *X* based on the specification information Xx and adds additive information Z4 and Z5 thereto to generate edited contents data d23. The additive information Z4 is information for specifying the destination to save (a directory for backup, for example), and additive information Z5 is a file to be saved or information for identifying the file. Incidentally, the destination to save, which is the additive information Z4, is specified beforehand by the user or determined by the edit means 112 or instruction-receiving system C1 in accordance with the prescribed rules. The edited contents data 23 are sent by the send means 113 ((2) in the figure). When receiving the edited contents data d23 from the send means 113, the Web browser 200 executes processing in accordance therewith, adds the additive information Z4 and Z5 to the saving request p13 and send the resultant to the instruction-receiving system C1 specified by the specification information Xx ((3) in the figure). In the instruction-receiving system C1, the instruction execution means 310 selects instructions p23 corresponding to the instructions p13 from the instruction memory portion D30 and executes the instructions p23 having the additive information Z4 and Z5 incorporated therein. The instructions p23 are instructions for saving a file specified by the additive information Z5 in a destination-to-save system G specified by the additive information Z4 and returning the resultant value to the Web browser 200. As a result, the file updated or added by the memory *F* is saved in the destination-to-save system G and backed up ((4) in the figure). In addition, a backup success/unsuccess signal is sent as the resultant value to the Web browser 200 ((5) in the figure).

(Example 4: Printout Request) Figure 5D is an explanatory view illustrating a printout request. When a user enters specification information Xx, the Web browser sends the specification information Xx to the Web server 100. In addition, when the user enters a request for printout of a specified file on the Web browser 200, the Web browser sends a processing request Y4 thereof ((1) in the figure). When receiving the processing request Y4, the Web server 100 acquires unedited contents data d14 corresponding to the processing request Y4. The unedited contents data d14 contains processing instructions P4 to send instructions p14 for requesting printout of the file to the instruction-receiving system specified by the optional specification information X. The edit means 112 converts the specification information X on the basis of the specification information Xx and adds additive information Z6 to the instructions p14. The additive information Z6 is a file specified by the user or information for identifying the file. Edited contents data d24 is sent by the send means 113 ((2) in the figure). When receiving the edited contents data d24 from the send means 113, the Web browser 200 executes processing in accordance therewith, adds the additive information Z6 to the instructions p14 and sends the resultant to the instruction-receiving system C1 specified by the specification information Xx ((3) in the figure). The instruction-receiving system C1 causes the instruction execution means 310 to select instructions p24 corresponding to the instructions p14 from the instruction memory portion D30 and execute the instructions p24 having the additive information Z6 incorporated therein. The instructions p24 are instructions for causing the instruction-receiving system C1 to print out the file specified by the specification information Z6 with a printer and execute processing for sending the resultant value to the Web browser. As a result, in the instruction-receiving system C1, the file is printed out ((4) in the figure), and a printout success/unsuccess signal is sent as the resultant value to the Web browser 200 ((5) in the figure).

(Example 5: Control for External Equipment) Figure 5E is an explanatory view illustrating a control for external equipment. The external equipment is connected to the instruction-receiving system C1 and can be controlled by instructions from the instruction-receiving system C1. When a user enters the specification information Xx, the specification information Xx is sent from the Web browser to the Web server 100. In addition, when the user enters a control to external equipment *H* specified as a processing request Y5, the Web browser 200 sends the processing request Y5 ((1) in the figure). When receiving the processing request Y5, the Web server 100 acquires unedited contents data d15 corresponding to the processing request Y5. The unedited contents data d15 contains processing instructions to send prescribed control instructions p15 relative to optional external equipment to the instruction-receiving system specified by the optional specification information *X.* The edit means 112 converts the optional specification information *X* into the unedited contents data d15 on the basis of the specification information Xx and adds additional information Z7 to the control instructions p15. The edited contents data d25 is sent by the send means ((2) in the figure). The additive information Z7 is information for specifying the external equipment *H* entered by the user. When receiving the edited contents data d25, the Web browser 200 execute processing in accordance therewith and sends the control instructions p15 added with the additive information Z7 to the instruction-receiving system C1 specified by the specification information Xx ((3) in the figure). The instruction-receiving system C1 causes the instruction execution means 310 to select instructions p25 corresponding to the control instructions p15 from the instruction memory portion D30 and executes the instructions p25 having the additive information Z7 incorporate therein. The instructions p25 are prescribed control instructions relative to the specified external equipment *H.* As a result, the specified external equipment *H* is controlled based on the control instructions p15 ((4) in the figure).

Incidentally, the processing instructions of the contents data d1x and d2x may be described in Java (registered trademark) script or under Flash (registered trademark) standards, HTML standards or other standards.

According to the Web system A1, since the contents data d2x from the Web server 100 contains intended processing instructions Px relative to intended instruction-receiving system C1, the Web browser 100 can send intended instructions to the instruction-receiving system C1 only upon receiving the contents data d2x. Therefore, even in an environment in which a direct control from the Web server 100 to the instruction-receiving system C1 cannot be made, it is possible to make a control from the Web server 100 to the instruction-receiving system C1 via the Web browser 200 to enable the client B1 to eliminate the use of an application for the instruction-receiving system C1 even in the connection environment.

In addition, even in the case of transferring an intended file from the instruction-receiving system C1 to the forwarding destination, since the corresponding transfer instructions are contained in the contents data d2x, when the Web browser has received the contents data d2x, the transfer instructions are returned to the instruction-receiving system C1. As a result, the file is transferred from the instruction-receiving system C1 directly to the intended forwarding destination, and an operation of further transferring the file from the client B1 to the forwarding destination after the user moves the file from the instruction-receiving system C1 to the client B1 becomes unnecessary to perform, thereby facilitation the transferring operation.

### (Second Embodiment)

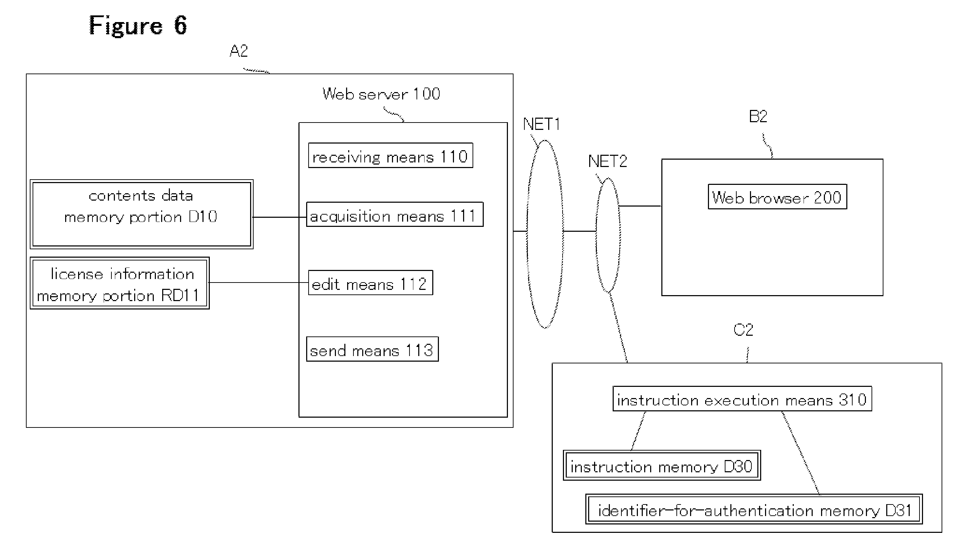

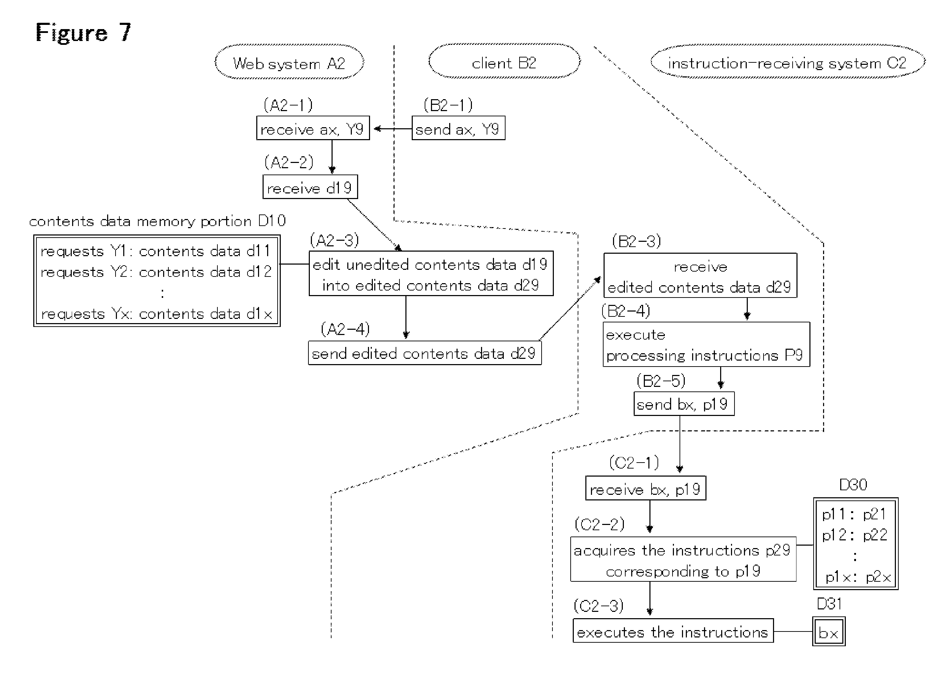

The present embodiment has a configuration in addition to that of the preceding embodiment, in which the instruction-receiving system has an authentication function. Incidentally, the constituent elements of the present embodiment similar to those of the preceding embodiment are given similar reference symbols and numerals, and the description thereof is omitted. Figure 6 is a function configuration diagram illustrating the present embodiment and Figure 7 is a flowchart illustrating the performance thereof.

A Web system A2 is equipped with a license information memory portion RD11 connected to a Web server 100, and receiving means 110 and edit means 112 have functions different from the aforementioned functions, respectively.

The license information memory portion RD11 is a database having pieces of license information of users accumulated and stored and storing therein user identifiers a1, ..., ax, specification information X1, ..., Xx and identifiers for authentication b1, ..., bx as being mapped to one another (refer to Figure 7). The user identifiers ax are identifiers for identifying users, and the identifiers for authentication bx are identifiers uniquely determined in the instruction-receiving systems C2, respectively.

The receiving means 110 has a function to receive the user identifier ax from a Web browser 200 and a function to receive an authentication request Y9 from the Web browser 200. The user identifier and authentication request may be received simultaneously or at different timings.

Acquisition means 111 has a function to acquire contents data d19 corresponding to an authentication request Y9 from a contents data memory portion D10.

When the receiving means 110 has received the authentication request Y9, edit means 112 acquires specification information Xx and identifier for authentication corresponding to the user identifiers ax from the license information memory portion RD11 and has a function to edit unedited contents data d19 acquired by the acquisition means 111 into contents data 9 containing processing instructions P9 to send authentication instructions p19 using the identifier for authentication bx to the instruction-receiving system C2 specified by the specification information Xx.

For example, the unedited contents data d19 corresponding to the authentication request Y9 contains the processing instructions P9 to send the authentication instructions p19 using an optional identifier for authentication *b* to the instruction-receiving system specified by optional specification information *X.* The authentication instructions p19 are instructions to initiate authentication instructions (program for authentication) p29 of the instruction-receiving system C2. When the receiving means 110 has received the authentication request p9, the edit means 112 converts the optional specification information *X* on the basis of the specification information Xx acquired from the license information memory portion RD11 and also converts the optional identifier for authentication *b* based on the identifier for authentication bx acquired from the license information memory portion RD11 into edited contents data d29. Incidentally, when making the conversion, either the identifier for authentication bx with no modification or a coded identifier for authentication bx may be used.

A client B2 performs processing in accordance with the edited contents data d29 when the Web browser 200 has received the edited contents data d29. As a result, the authentication instructions p19 using the identifier for authentication bx are sent to the instruction-receiving system C2.

The instruction-receiving system C2 is equipped with an identifier-for-authorization memory portion D31 in which the identifiers for authentication *b* are stored. The identifier for authentication *b* is an identifier uniquely determined in the instruction-receiving system C2 and set beforehand in the instruction-receiving system C2.

The instructions p29 to crosscheck the received identifier for authentication bx and identifier for authentication b stored in the identifier-for-authentication memory portion D31 are stored in the instruction memory portion D30 as instructions corresponding to the authentication instructions p19 from the Web browser 200.

When receiving the authentication instructions p19 using the identifier for authentication bx from the Web browser 200, the instruction execution means 310 of the instruction-receiving system C2 selects the instructions p29 corresponding to the authentication instructions p19 from the instruction memory portion D30 and executes the instructions p29 having the identifier for authentication bx incorporated therein.

### Explanation of Performance)

When a user enters a user identifier ax and an authentication request Y9 on the client B2, the Web browser 200 sends the user identifier ax and authentication request Y9 to the Web server 100 (B2-1). Incidentally, the user identifier ax and authentication request Y9 may be sent simultaneously or at different timings.

When the receiving means 110 of the Web system A2 receives the user identifier ax and authentication request Y9 (A2-1), the acquisition means 111 acquires unedited contents data for authentication d19 from the contents data memory portion D10 (A2-2). Next, the edit means 112 acquires the specification information Xx corresponding to the user identifier ax and the identifier for authentication bx from the license information memory portion RD11 and edits the unedited contents data d19 having these identifiers incorporated therein into edited contents data d29 (A2-3). The edited contents data d29 contains processing instructions P9 to send the authentication instructions p19 using the identifier for authentication bx to the instruction-receiving system C2 specified by the specification information Xx. The edited contents data d29 is sent to the Web browser 200 by the send means 113 (A2-4).

When receiving the edited contents data d29 (B2-3), the Web browser 200 executes the processing instructions (B2-4) and sends the authentication instructions 19 using the identifier for authentication bx to the instruction-receiving system C2 specified by the specification information Xx (B2-5).

When the instruction-receiving system C2 has received these instructions (C2-1), the instruction execution means 310 acquires the instructions p29 corresponding to the authentication instructions p19 (C2-2). Subsequently, the instruction execution means 310 executes the instructions p29 to crosscheck the identifier bx for authentication bx and the identifier for authentication *b* stored in the identifier-for-authentication memory portion D31. When the two identifiers have agreed with each other, this is regarded as an authentication success to permit subsequent communications and, when the two identifiers have disagreed with each other, this is regarded as an authentication unsuccess to refuse subsequent communications. As a result, the reliability of the communications from the Web server 100 via the client B2 is confirmed to enable communications to be permitted or refused. Incidentally, the authentication result may be transmitted to the client B2 as occasion demands.

### (Third Embodiment)

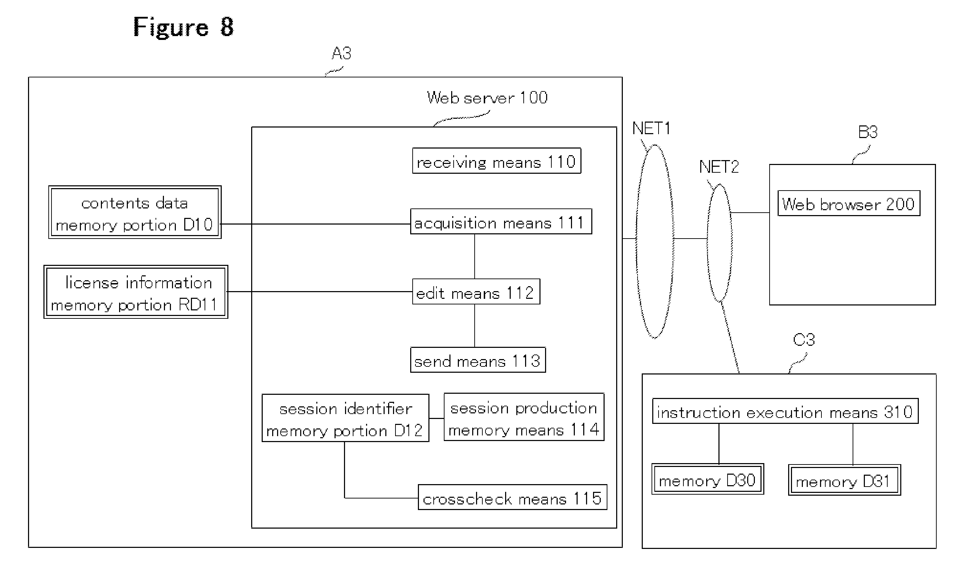

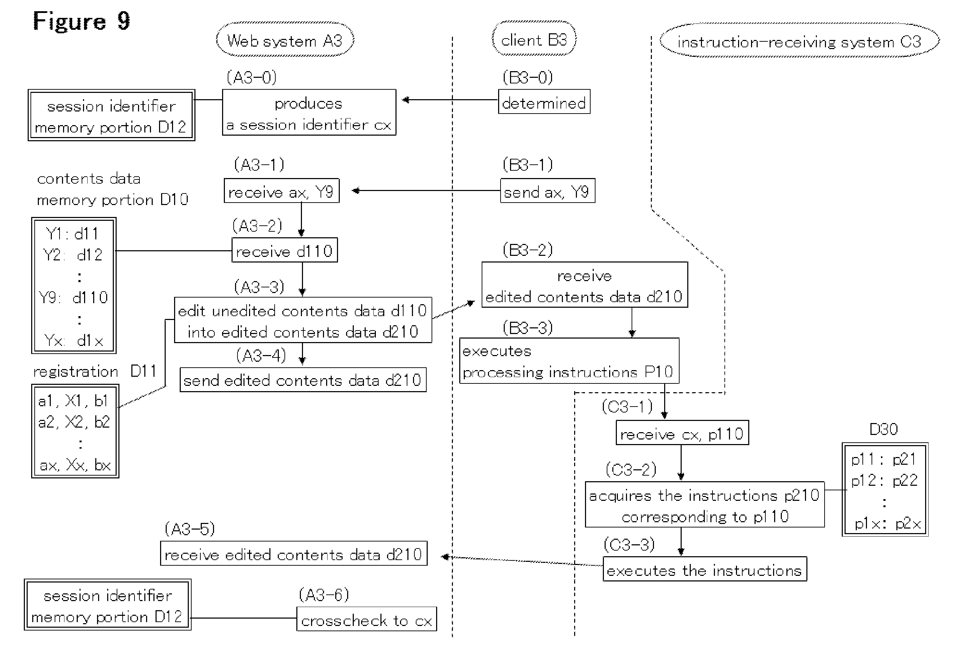

The present embodiment has a configuration in addition to that of the second embodiment, in which a Web system has an authentication function. Incidentally, the constituent elements of the present embodiment similar to those of the above embodiment are given similar reference symbols and numerals, and the description thereof is omitted. Figure 8 is a function configuration diagram illustrating the present embodiment and Figure 9 is a flowchart illustrating the performance thereof.

The Web server 200 of the Web system A3 is equipped with session production memory means 114 and crosscheck means 115, and edit means 112 has a function different from the above function.

Session identifier production memory means 114 produces a session identifier cx uniquely determined relative to a session with the Web browser 200 when receiving a connection request from the Web browser of a client B3 and is equipped with a function to store the session identifier in a session identifier memory portion D12. The session identifier cx is stored as being mapped to the Web browser of the client B3, and subsequent communications with the Web browser are carried out using the session identifier cx.

When receiving the session identifier cx from an instruction-receiving system C3, the crosscheck means 115 functions to crosscheck the received session identifier cx and session identifiers c1, ..., cx stored in the session identifier memory portion D12.

When the receiving means 110 receives the user identifier ax and authentication request Y9, the edit means 112 acquires the specification information Xx corresponding to the user identifier ax from the license information memory portion RD11 and functions to edit contents data 110 acquired from the acquisition means 111 into edited contents data d210 containing processing instructions P10. The processing instructions P10 are instructions to send return instructions p110 for returning the session identifier cx to the Web server 100 to the instruction-receiving system C3 specified by the specification information Xx. For example, in the case where unedited contents data d110 contain processing instructions P10 to send to the instruction-receiving system specified by optional specification information *X* the return instructions p110 for returning an optional session identifier c to the Web server 100, the optional session identifier c is converted on the basis of the session identifier cx, and the optional specification information *X* is converted based on the specification information Xx. Incidentally, the optional session identifier c may be substituted with a produced session identifier cx or a coded session identifier cx.

Instruction execution means 310 of the instruction-receiving system C3 has the following functions. When receiving the session identifier cx and return instructions p110 from the Web browser 200, the instruction execution means 310 select instructions p210 corresponding to the return instructions p110 from the instruction memory portion D30 and executes the selected instructions having the received session identifier cx incorporated therein. The instructions p210 are instructions for returning the received session identifier cx to the Web server 100.

### (Explanation of Performance)

The Web browser 200 makes an initial connection request to the Web server 100 (B3-0). When receiving the initial connection request from the Web browser 200, the Web server 100 utilizes the session identifier production memory means 114 to produce the session identifier cx and store it in the session identifier memory portion D12 (A3-0). The session identifier cx is stored as being mapped to the Web browser 200. The session identifier cx is also transferred to the Web browser 200, and thereafter communications between the Web server 100 and the Web browser 200 are added with the session identifier xc, respectively, to enable a communication destination and a communication sender to be identified.

The Web browser 200 on which the user has entered the user identifier ax and authentication request Y9 sends these to the Web server 100 (B3-1). When the Web server 100 has received these (A3-1), the acquisition means 111 acquires unedited contents data d110 corresponding to the authentication request Y9 from the contents data memory portion D10 (A3-2). The edit means 112 acquires the specification information Xx corresponding to the user identifier ax from the license information memory portion RD11 and edits the unedited contents data d110 into edited contents data d210 containing processing instructions P10 (A3-3). The processing instructions P10 are instructions to send return instructions p110 for returning the user identifier ax to the Web server 100 to the instruction-receiving system C3 specified by the specification information Xx. For example, when the unedited contents data d110 contains processing instructions P10 to send an optional session identifier *b* and return instructions p110 to the instruction-receiving system specified by optional specification information *X*, the optional session identifier *b* is converted on the basis of the session identifier cx, and the optional specification information *X* is converted based on the acquired specification information Xx. The edited contents data d210 are returned to the Web browser 200 by the send means 113 (A3-4).

When receiving the edited contents data d210 (B3-2), the Web browser 200 executes processing in accordance with the contents data d210. As a result, the session identifier cx and return instructions p110 for returning the session identifier cx to the Web server A3 are sent to the instruction-receiving system specified by the specification information Xx (B3-3).

When the instruction-receiving system C3 has received these (C3-1), the instruction execution means 310 acquires instructions p210 corresponding to the return instructions p110 from the instruction memory portion D30 (C3-2) to execute the instructions p210 having incorporated therein a return destination contained in the return instructions p110. As a result, the session identifier cx is sent to the Web server 100 (C3-3).

When receiving the session identifier cx from the instruction-receiving system C3, the Web server 100 crosschecks the session identifier cx and session identifiers c1, ..., cx stored in the session identifier memory portion D12 (A3-5). As a result, since communications from the client B3 via the instruction-receiving system C3 are reliable when a coincident session identifier cx exists, the Web server 100 permits subsequent communications using the session identifier cx.

That is to say, the reliability of the communications from the Web server 100 via the Web browser 200 is confirmed in the instruction-receiving system C3 (refer to the second embodiment), and the reliability of the communications from the client B3 via the instruction-receiving system C3 is confirmed in the Web system A3 (refer to the present embodiment) to thereby enable the reliability of all the communications to be confirmed. Incidentally, only in the case of the instruction-receiving system C3 having succeeded in the authentication, the session identifier cx may be returned by the instruction-receiving system C3. Thus, in the case of the instruction-receiving system C3 having not succeeded in the authentication, no authentication is performed in the Web server 100 and, as a result, all the communications can be refused.

### (Working Example)

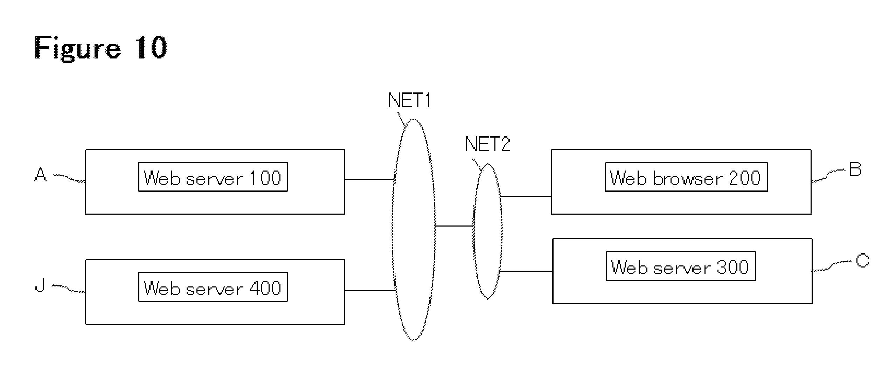

A concrete working example will be described hereinafter. The present working example includes all the functions of the aforementioned embodiments. Incidentally, the present invention is not limited to this working example and can appropriately be modified within the scope of the present invention. Figure 10 is an explanatory view illustrating a network connection state of the present working example. A Web system *A* and published Web system *J* are connected to each other via a global area network NET1. A client *B* and an instruction-receiving system *C* are connected to the global area network NET1 via a local area network NET2. A Web server 100 of the Web system *A* and a Web server 400 of the published Web system *J* are set to be capable of replying to a request sent from a Web browser 200 of the client *B* via the global and local area networks NET1 and NET2. The instruction-receiving system *C* is equipped with a Web server 300 set to be capable of replying a request sent from the Web browser 200 of the client *B* via the local area network NET2. The Web system *A* and published Web system *J* are set to be capable of replying to request from the client *B* and instruction-receiving system *C* and incapable of making controls relative to the client *B* and instruction-receiving system *C.* Incidentally, the published Web system J has functions to save files for publication in a memory within the published Web system *J* and publish the Web pages thereof via the global network NET1.

### <Initial Registration>

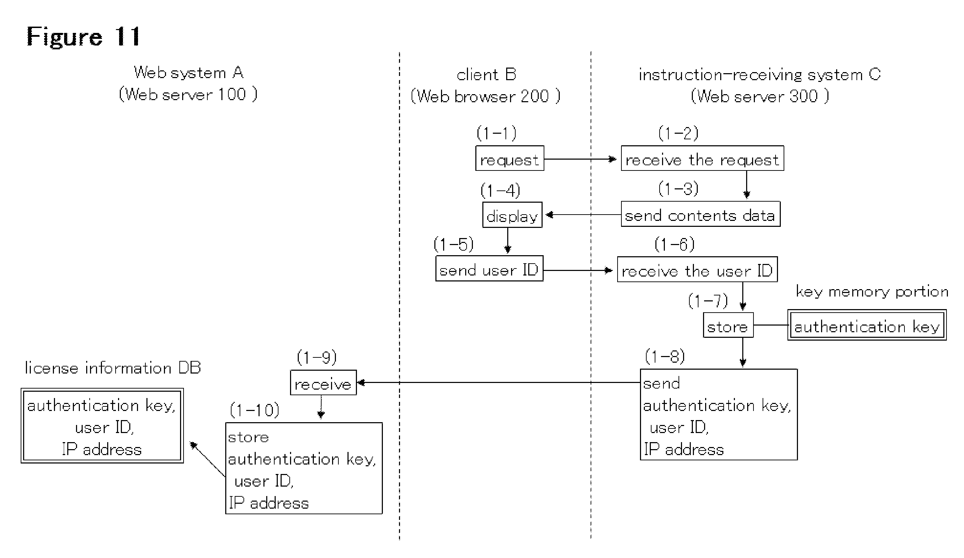

Figure 11 is a flowchart illustrating initial registration. When the Web browser 200 of the client *B* has made a registration request to the instruction-receiving system *C* based on entry by a user (1-1), the Web server 300 of the instruction-receiving system receives the request (1-2) and sends contents data for a registration screen (1-3). The Web browser 200 receives the data and displays the registration screen (1-4). When the user has entered a user ID and a request to send data on the registration screen, the Web browser 200 sends the user ID to the Web server 300 of the instruction-receiving system C (1-5). When having received the user ID (1-6), the Web server 300 acquires an authentication key stored in an authentication key memory portion (1-7) and sends the authentication key, user ID and its own IP address to the Web server 100 (1-8). Incidentally, the authentication key is an identifier uniquely determined by the instruction-receiving system *C* and set beforehand in the instruction-receiving system *C.* In addition, the IP address is stored beforehand in the instruction-receiving system *C* or set automatically by a DHCP. When the Web server 100 of the Web system *A* has received the user ID, authentication key and IP address (1-9), these data are stored in a license information database as being mapped to one another (1-10). With this, the initial registration is terminated.

### <Authentication Processing>

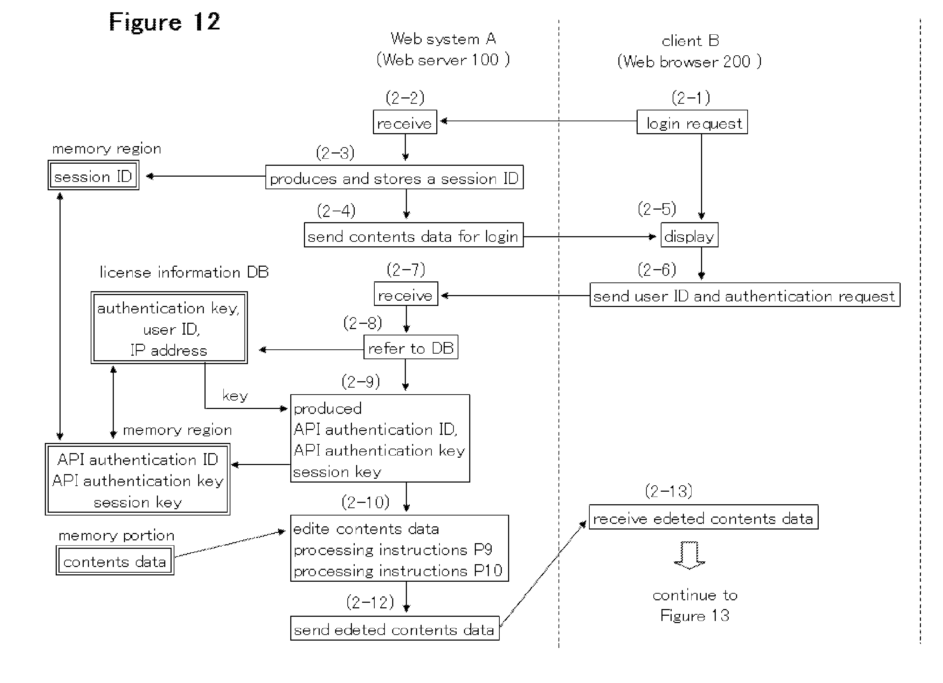

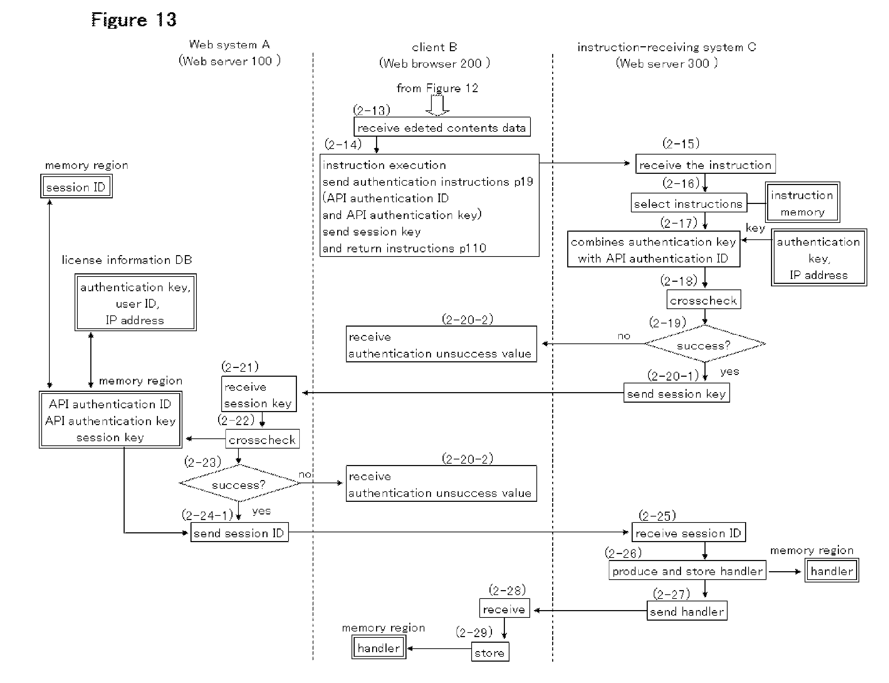

Figure 12 and Figure 13 are flowcharts illustrating authentication processing. Incidentally, the processing in Figure 13 follows that in Figure 12 as the successive processing. When the user has entered a login request from the Web browser 200 of the client *B,* the Web browser 200 sends the login request to the Web server 100 of the Web system *A* (2-1). When the Web server 100 has received the login request (2-2), it produces and stores a session ID (2-3) and, with the session ID incidental thereto as cookie data, sends contents data for login (2-4). When having received the contents data for login, the Web browser 200 displays a login screen and, at the same time, stores the session ID as the cookie data (2-5). When the user has entered a user ID and an authentication request, the Web browser 200 sends these to the Web server 100 together with the session ID stored in the cookie data (2-6). In subsequent communications from the Web browser 200 to the Web server 100 with the session IDs incidental thereto as cookie data as needed, a send enables the position of the Web server 100 within a memory region to be identified.

The Web server 100 refers, when receiving the user ID by the receiving means 110 (2-7), to license information DB and acquires an authentication key and an IP address corresponding to the received user ID (2-8). It further produces an API authentication ID (one time key), an API authentication key having the API authentication ID combined with the authentication key and coded and a session key (one time key), stores the produced API authentication ID, API authentication key in the memory region as being mapped to the user ID and the produced session key in the memory region as being mapped to the session ID (2-9). The acquisition means 111 of the Web server 100 acquires contents data corresponding to the authentication request (2-10), and the edit means 112 edits the contents data (2-11). The edited contents data contains first processing instructions P9 and second processing instructions P10 (2-11). The first instructions P9 are instructions to send authentication instructions p19 using the API authentication ID and API authentication key to the instruction-receiving system *C* specified by the acquired IP address, and the second instructions P10 are instructions to send the session key and return instructions p110 to the instruction-receiving system *C* specified by the acquired IP address. Here, the return instructions p110 are instructions to return the session key to the Web server 100. The edited contents data are sent by the send means 113 to the Web browser 200 (2-12).

When receiving the edited contents data (2-13), the browser 200 of the client *B* the processing instructions P9, sends authentication instructions p19 using the API authentication ID and API authentication key to the instruction-receiving system C, executes the processing instructions P10 and sends the session key and return instructions p110 to the instruction-receiving system *C* (2-14).

The instruction-receiving system C, when receiving these (2-15), selects instructions corresponding to the authentication instructions p19 and return instructions p110 from the instruction memory portion (2-16). It acquires the authentication key from an authentication key memory portion through the execution of the instructions corresponding to the authentication instructions, combines the authentication key with the API authentication ID, codes the combination as is done in step (2-9) mentioned above, and crosscheck the coded value and the API authentication key (2-18). When the two have agreed to each other, this case is regarded as an authentication success (2-19). In the case where the processing results of the authentication instructions p19 reveal the authentication success, the session key is sent to the Web server 100 through the execution of instructions p210 corresponding to the return instructions p110 (2-10-1). In the case of an authentication unsuccess, the authentication processing is terminated here, and a resultant value of the authentication unsuccess is sent to the Web browser 200. The Web browser 200 receives the resultant value (2-10-2).

The Web server 100 refers, when receiving the session key (2-21), to the memory region, crosschecks whether a session key coincident with the received session key exists (2-22) and, in the presence of the coincidence, judges an authentication success (2-23) and returns the session ID mapped to the session key to the instruction-receiving system *C* (2-24-1). It judges an authentication unsuccess in the absence of the coincident session key, refuses subsequent communications and, at the same time, sends a result value of the authentication unsuccess to the Web browser 200. The Web browser 200 receives the resultant value and displays the authentication unsuccess (2-24-2).

When receiving the session ID (2-25), the Web server 300 of the instruction-receiving system *C* produces and stores a handler (one time key) uniquely mapped to a session between the Web server 300 and the Web browser 200 of the client *B* (2-26) and sends it to the Web browser 200 (2-27). The Web browser 200 receives the handler (2-28) and stores it (2-29). In the subsequent processing, by using this handler in the communications between the Web browser 200 and the Web server 300 of the instruction-receiving system C, the communications between the client *B* and the instruction-receiving system *C* are permitted. Through the series of processes described above, the reliability of the communications among the Web server 100 of the Web system *A,* Web browser 200 of the client *B* and Web server 300 of the instruction-receiving system *C* is confirmed.

### <File List Acquisition>

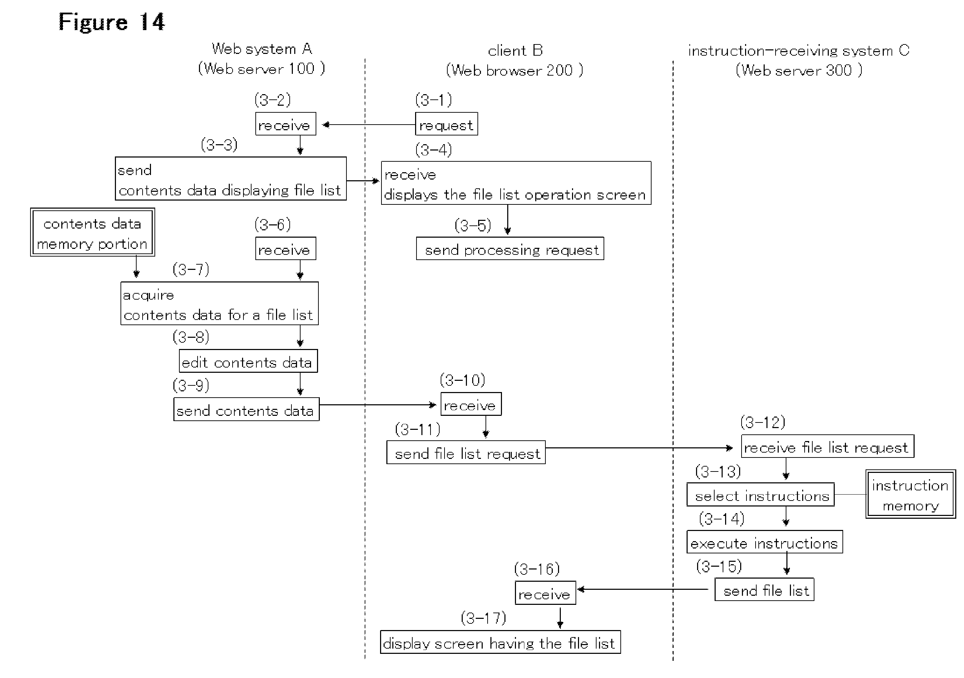

Acquisition of the file list is executed during the course of the file transfer. Figure 14 is a flowchart illustrating file list acquisition processing. After the termination of the authentication, the user enters a request for a file list operation screen. The Web browser 200 sends the request to the Web server 100 (3-1). When receiving it (3-2), the Web server 100 sends contents data displaying the file list operation screen (3-3). When receiving the contents data, the Web browser 200 displays the file list operation screen in accordance therewith (3-4). The user specifies the instruction-receiving system registered at the time of the initial registration, enters instructions to specify an intended directory within the instruction-receiving system (directory path) and requests acquisition processing of the file list in the directory. The Web browser 200 sends the processing request to the Web server 100 (3-5).

When causing the receiving means 110 to receive the processing request (3-6), the Web server 100 causes the acquisition means 111 to acquire contents data for a file list corresponding to the processing request (3-7). Based on the session ID used in the session to the Web browser 200, the Web server 100 acquires the user ID received in the session ID (refer to (2-6) and (2-7), refers to the license information database and acquires the IP address of the instruction-receiving system *C* mapped to the user ID. That is to say, in the present working example, the user ID received at the time of the authentication serves as the specification information that specifies the instruction-receiving system and, in the subsequent processing, the IP address identified by the user ID is used as the specification information. The edit means 112 edits the contents data into contents data containing processing instructions to send instructions to request the file list in the specified directory to the instruction-receiving system C specified by the IP address (3-8).

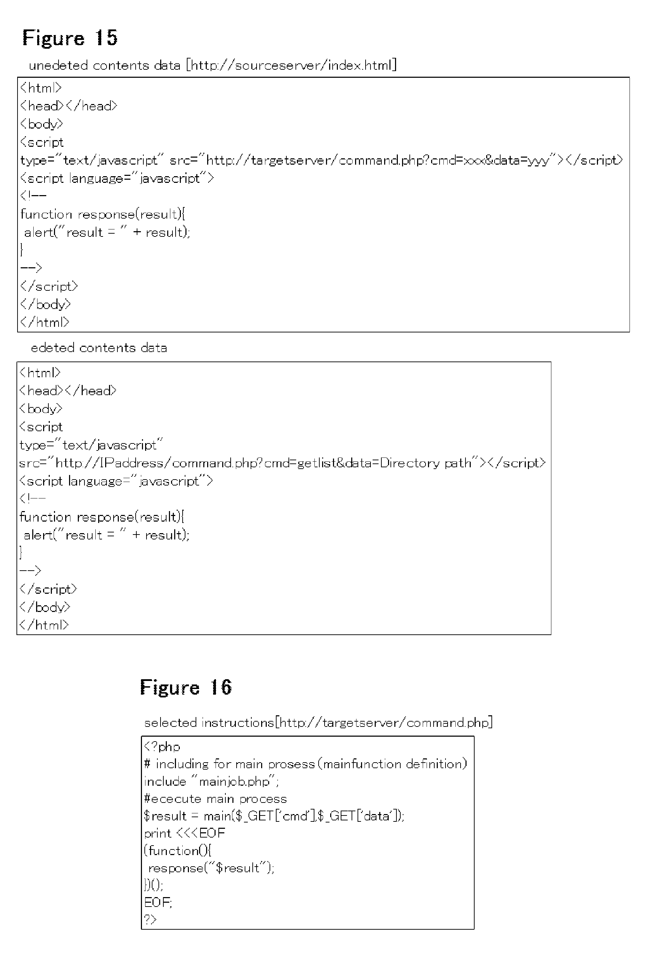

Figure 15 includes diagrams showing examples of HTML files that are unedited contents data and HTML files that are edited contents data. In the present working example, instructions, such as "getlist", "sendfile", etc. as being mapped to processing requests are stored in the memory region. The edit means 112 acquires the instructions "getlist" corresponding to the processing request for processing file list acquisition replaces it with an IP address having acquired "targetserver" of the processing instructions "src=http://targetserver/command.phy?cmd=xxx&data=yyy" contained in the unedited contents data, replaces "xxx" that is a parameter to a program file "command.php" with "getlist" and replaces "yyy" with a "directory path" received from the Web browser 200. Incidentally, the "command.php" is the name of the program stored in the instruction memory portion D30 of the instruction-receiving system, and the "getlist" is the instructions to request a file list in the specified directory. Figure 16 shows a program of the "command.php". This program executes instructions delivered by the parameter "xxx", with the directory path or file name delivered by the parameter "yyy" as a processing target. The edited contents data are sent to the Web browser 200 by the send means 113 (3-9).

When receiving the edited command data (3-15), the Web browser 200 executes the same. As a result, the processing instructions of the edited contents data "<script type= "text/Java script" scr=http://IP address/command php?cmd=getlist&data=directory path></script>" are analyzed and executed as processing for reading Java (registered trademark) script contents, and instructions for initiating the "command.php" and the parameter to the program "cmd=getlist&data=directory path" are sent to instruction-receiving system *C* in the IP address destination (3-11).

When receiving the instructions (3-12), the instruction-receiving system C selects instructions (program file) specified by the "command.php" from the instruction memory portion (3-13) and executes the program having the parameter "cmd=getlist&data=directory path" incorporated therein (3-14). Figure 16 is a diagram showing one example of instructions selected. As a result, the file list of the specified directory is prepared as Java (registered trademark) script contents and set to the Web browser 200 (3-15). The Web browser 200 having received the file list executes the received Java (registered trademark) script contents and displays the display screen having the file list incorporated therein (3-17).

### <File Transfer>

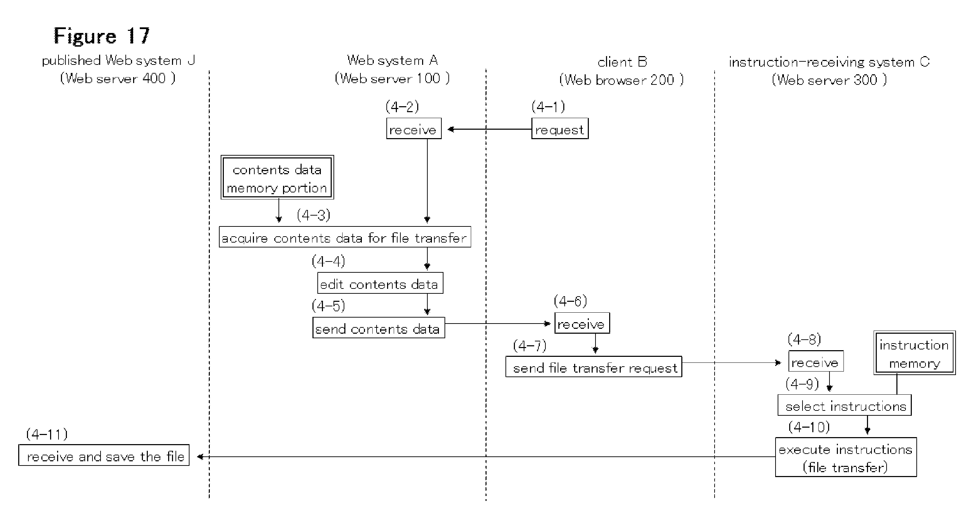

Figure 17 is a flowchart illustrating file transfer processing. When a user has specified an intended file from the file list displayed on the display screen and entered a processing request for file transfer to a specified forwarding destination, the Web browser 200 sends the processing request (4-1). Incidentally, in the present working example, the file-forwarding destination is set beforehand within the instruction-receiving system *C.* When receiving the processing request (4-2) the Web server 100 causes the acquisition means 100 to acquire contents data for file transfer from the contents data memory portion (4-3). Incidentally, the Web server 100 identifies a user ID based on the session ID used for the session with the Web browser in the same manner as described above and acquires an IP address of the instruction-receiving system *C* mapped to the user ID. In the subsequent processes, the IP address is used as specification information. The edit means 112 edits the acquired contents data into contents data containing processing instructions for sending transfer instructions of the specified file to the instruction-receiving system *C* of the IP address destination (4-4).

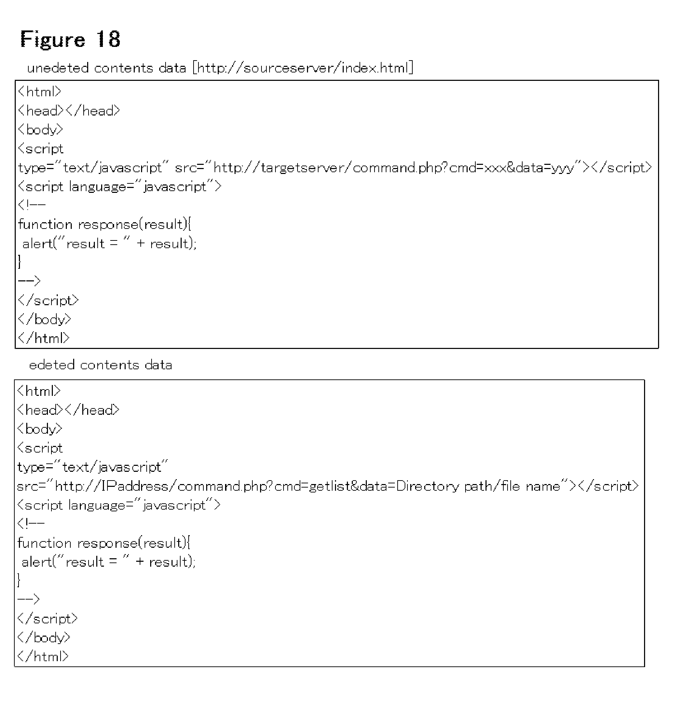

Figure 18 includes diagrams showing examples of unedited contents data and edited contents data. The edit means 112 acquires instructions "sendfile" corresponding to the processing request of file transfer, replaces it with an "IP address" having acquired "targetserver" of the processing instructions "src=http://targetserver/command.php?cmd=xxx&data=yyy" contained in the unedited contents data, replaces "xxx" that is a parameter for the program file "command.php" with "sendfile" and replaces "yyy" with a "directory path/file name" received from the Web browser 200. The edited contents data are sent by the send means 113 to the Web browser 200 (4-5).

When receiving the edited contents data (4-6), the Web browser 200 executes the same. As a result, the edited processing instructions "<script type="text/Java script" src=http://IP address/command.php?cmd=sendfile&data=directry path/file name>/script" are analyzed and executed as Java (registered trademark) script contents-reading processing, and instructions for initiating the program "command.php" of the file-forwarding destination and the parameter "yyy=sendfile&data=directory path/file name" for the program are sent to the instruction-receiving system *C* (4-7).

When receiving the instructions (4-8), the instruction-receiving system C selects instructions (program file) specified by the "command.php" (4-9) and executes the program having the parameter "cmd=sendfile&data=directory path/file name" incorporated therein (4-10). As a result, a file specified by the URL of the specified destination to save is transferred. Incidentally, the URL of the destination to save is determined, in executing the instructions, based on the rules set beforehand in the instruction-receiving system *C***.** For example, the rules comprise adding a host name set in advance to "director path/file name" delivered by "data" to convert the resultant into "server name/directory path/file name" and using it as the URL of the destination to save. In addition, the resultant value of the transfer success/unsuccess is returned to the Web browser 200. The published Web server 400 of the published Web system *J* specified by the URL receives the file and saves the file in the directory specified by the URL (4-11). As a result, the file saved in the instruction-receiving system *C* can be uploaded to the published Web system *J.* The user can directly upload a file to be uploaded from the instruction-receiving system C to the published Web system J and eliminate execution of the conventional cumbersome operation of once moving a file to the client B and then uploading the file to the published Web server.

It is noted here that the user ID corresponds to the user identifier, that the authentication key, API authentication ID and API authentication key correspond to the authentication identifiers, the user identifier and IP address correspond to the specification information and that the session ID and session key correspond to the session identifiers.

As described above, according to the present invention, even in the connection environment in which a direct control from the Web server to the instruction-receiving system cannot be made, a control of the instruction-receiving system from the Web server via the Web browser can be made and, therefore, it is possible to eliminate the use of an application for the instruction-receiving system in the client even in the above connection environment. In addition, in transferring a file, since it is possible to directly transfer the file from the forwarding destination to the destination to save and eliminate execution of the conventional cumbersome user's operation of moving a file from an instruction-receiving system to a client and thereafter moving it from the client to a forwarding destination, the operation can be executed very easily.

### (Fourth Embodiment)

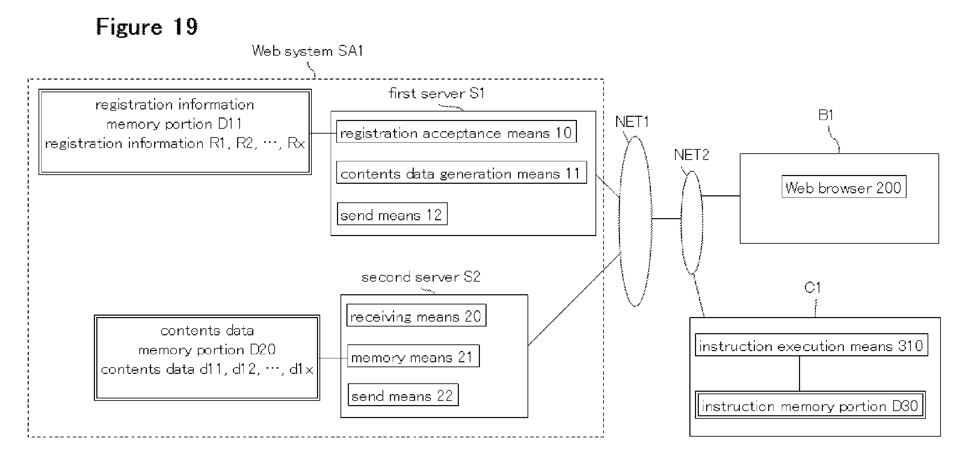

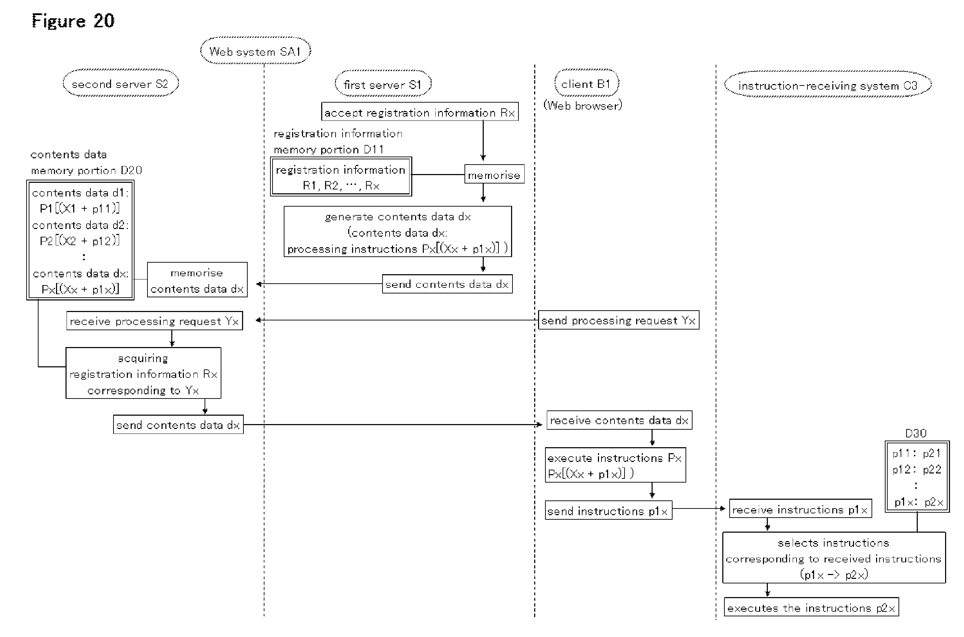

Figure 19 is a function configuration diagram illustrating the fourth embodiment of the present invention, and Figure 20 is a flowchart illustrating the performance of the present embodiment. A web system SA1 is equipped with a first server S1 and a second server S2, and communications can be attained via a network NET1. A client B1 and instruction-receiving system C1 are connected to a network NET2, and the network NET2 can be connected to the network NET1. The second server S2 can communicate with the client B1 via the networks NET1 and NET2. The network NET1 is a global area network, such as the Internet, and the second network NET2 is a local area network, such as a private LAN. From the relationship of a unidirectional communication environment, such as NAT (Network Address Translation), a direct control from the Web system SA1 to the instruction-receiving system C1 cannot be made though a processing request can be made relative to the first server S1, second server S2 or instruction-receiving system C1.

The first server S1 can be connected to the registration information memory portion D11, and the second server S2 can be connected to the contents data memory portion D20. The contents data memory portions D10 and D20 are materialized in the form of a memory, such as a hard disc, and plural contents data d1, d2, ..., dx are stored therein. The contents data, when being received by the Web browser, constitute program files in which instructions for causing the Web browser to execute prescribed processes are described, such as HTML files. The contents data d1, ..., dx can be mapped to processing request Y1, ..., Yx from the client B1. For example, when each processing request is received as a request of the contents data specified by a URL, it is mapped as the contents data specified by the URL.

The first and second servers S1 and S2 are materialized in the form of a computer system having communication functions including a CPU, memory, hard disc and network I/O. The first server S1 is equipped with registration acceptance means 10, contents data generation means 11 and send means 12.

The registration acceptance means 10 has a function to accept registration of registration information Rx containing specification information Xx for specifying an instruction-receiving system C1. The accepted pieces of registration information Rx are accumulated and stored in the contents data memory portion D10. Here, the specification information indicates information capable of directly or indirectly specifying the instruction-receiving system. The information capable of directly specifying it includes IP addresses or server names (local host names or FQDNs), for example. The information capable indirectly specifying it includes identifiers stored as being mapped to IP addresses or server names, such as user identifiers. In the case of pre-registering the user identifiers and IP addresses or server names (local host names or FQDNs) of the instruction-receiving system as preprocessing, the user identifiers and IP addresses or server names of the instruction-receiving system are stored in the memory portion of the Web system SA1 as being mapped to each other. When receiving a user identifier, the first server S1 can specify the IP address or server name stored as being mapped to the user identifier. Incidentally, the IP address or server name may be information capable of specifying the instruction-receiving system C1 at least from the client B1, such as a private IP address or local host name.

The contents data generation means 11 has a function to generate contents data containing processing instructions for send instructions to the instruction-receiving system C1 specified by the specification information Xx contained in the registration information Rx.

### (Example 1)

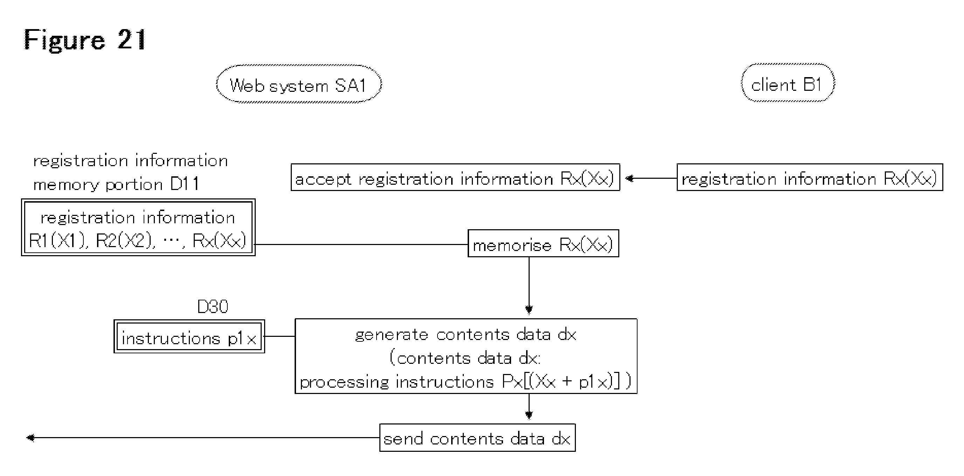

Figure 21 is an explanatory view illustrating Example 1 of contents data generation means 11. The contents data generation means 11 acquires the specification information Xx contained in the accepted registration information Rx, acquires instructions p1x from the instruction memory portion D30 having instructions stored therein and converts a prescribed location of the processing instructions Px within the unedited contents data stored in advance into the specification information XX and instructions p1 x to generate contents data dx. Incidentally, when plural instructions are stored in the instruction memory portion D30, contents data as regards each of the instructions are generated.

### (Example 2)

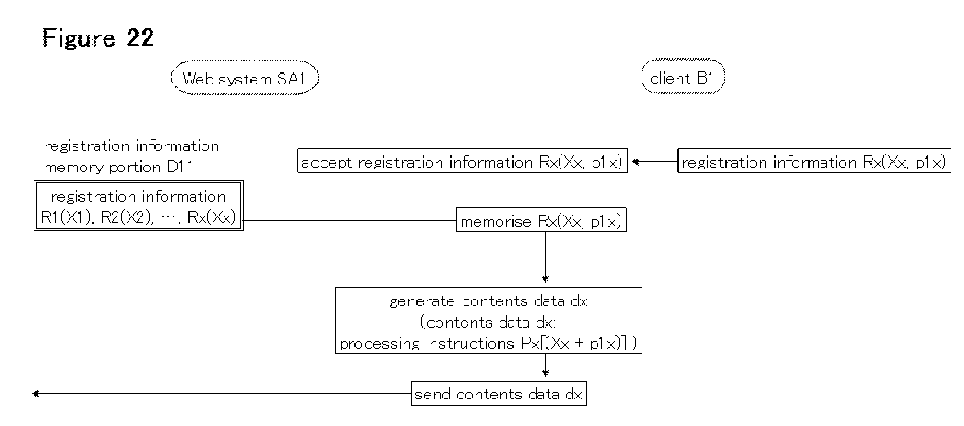

Figure 22 is an explanatory view illustrating Example 2 of the contents data generation means 11, in which the specification information Xx and instructions p1x are contained in the registration information Rx. The contents data generation means 11 acquires the specification information Xx and instructions p1x contained in the accepted registration information Rx and converts a prescribed location of the processing instructions Px within the unedited contents data stored beforehand in the specification information Xx and instructions p1x to generate contents data dx.

At this time, when the specification information Xx is an IP address or server name of the instruction-receiving system, optional specification information in the processing instructions Px is converted in its IP address or server name. In addition, when the specification information Xx is an identifier (user identifier, for example) stored as being mapped to the IP address or server name, since the identifier and corresponding IP address or server name of the instruction-receiving system are registered beforehand in the memory portion, the IP address or server name corresponding to the received identifier is acquired from the memory portion to convert optional specification information in the processing instructions Px into its IP address or server name.

The send means 12 has a function to send contents data dx generated by the contents data generation means 11 to the second server S2.

The second server S2 is equipped with receiving means 10, memory means 21 and send means 22. The receiving means 20 has a function to receive the contents data dx sent from the first server S1, and memory means 21 has a function to store the contents data dx in the contents data memory portion D20. The send means 22 has a function to send the contents data to the client B1 in accordance with a request from the client B1. Specifically, when receiving a processing request Yx from the client B1, the send means acquires the contents data dx corresponding to the processing request Yx from the contents data memory portion D20 and sends the contents data dx to the client B1. Incidentally, the processing request from the client B1 may be produced by user's entry or may be automatically produced on the background of the client B1. The former request includes instructions given to the instruction-receiving system for executing acquisition of a file list in the specified directory and transfer of the specified file to a specified destination, for example, and the latter request includes, when an update file or new file exists in a prescribed memory, instructions for backing up it in a prescribed destination to save, for example.

The processing request Yx is materialized in the form of instructions which selectively request contents data d1x stored in the contents data memory portion D20, such as a URL specifying a file corresponding to the processing request, for example, and adds additive information *Z* as occasion demands. The additive information *Z* includes information that specifies a directory in the case of acquiring a file list, information that specifies a file in the case of file transfer and information that specifies a destination to save in the case of a backup request. Each of the pieces of additive information is entered on the Web browser 200 of the client B1 by a user or produced in accordance with the prescribed rules. The send means 22 incorporates contents data dz therein in accordance with the prescribed rules when the additive information z is added to the processing request Yx.

The client B1 is a personal computer equipped with a CPU, memory, hard disc, communication function, display, keyboard and mouse and is provided with a Web browser 200. When receiving contents data (HTML file) dx from the second server S2, the Web browser 200 executes processing in accordance with the instructions (program) described in the contents data dx. The processing includes processing instructions given to the instruction-receiving system C1, image display onto the display, processing request given to other servers and other ordinary processes the Web browser can execute.

The instruction-receiving system C1 is hardware connected controllably from the client B1. The instruction-receiving system C1 is equipped with a computer system provided with a CPU or memory region. The instruction-receiving system C1 may be connected further to hardware, such as a printer, scanner and fax, or may build these devices therein as hardware resources.

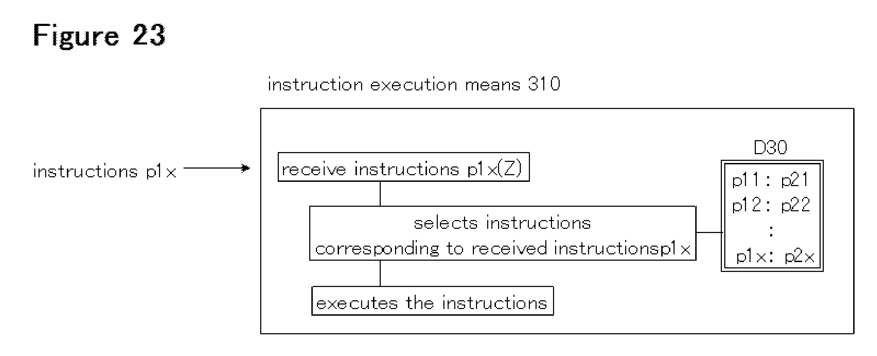

The instruction-receiving system C1 is equipped with instruction execution means 310 for executing instructions p1x received from the Web browser 200. Figure 23 is an explanatory view functionally illustrating the instruction execution means 310. A memory region, such as hard disc, of the instruction-receiving system C1 is equipped therein with an instruction memory portion D30. The instruction memory portion D30 stores therein instructions p21, ..., p2x that can be mapped to instructions p11, ..., p1x received from the Web browser 200. The instruction execution means 310 acquires instructions p2x corresponding to the received instructions p1x from the instruction memory portion D30 and executes it. When additive information *Z* is added to the received instructions p1x, the instructions p2x having the additive information *Z* incorporated therein is executed in accordance with the prescribed rules.

For example, the instruction memory portion D30 has programs p21, ..., p2x stored therein as instructions p21, ..., p2x. When receiving instructions p1x from the Web browser 200, the instruction execution means 310 selects a program p2x specified by the instructions p1x from the instruction memory portion D30 and executes it. The programs p21, ..., p2x are stored in the instruction-receiving system C1, as functions, procedures or API. Incidentally, the instruction execution means 310 is not limited to the above instruction execution means, but will suffice insofar as it can execute the received instructions.

### (Explanation of Performance)

The explanation of the performance will be described hereinafter. A user registers registration information Rx in advance. To be specific, the user accesses the first server S1 from an optional client and sends the registration information Rx. The first server S1 accepts the registration information Rx, stores it in the contents data memory portion D10 and, at the same time, generates contents data dx. The generated contents data dx are sent to the second server S2. Incidentally, the registration information Rx may be registered from the client B1 or other clients.

The second server S2 receives the contents data dx and stores it in the contents data memory portion D20.

Upon completion of the registration of the registration information Rx, the user accesses the second server S2 to enable intended instructions to be sent to the instruction-receiving system C1. To be specific, from the second server S2 the user receives an entry screen on the Web browser 200 of the client B1, enters a processing request Yx and send it to the second server S2.

When receiving the processing request Yx, the second server S2 selectively acquires contents data dx corresponding to the processing request Yx from the contents data memory portion D20 and sends the same to the client B1.

When receiving the contents data dx, the client B1 executes the processing instructions Px contained therein on the Web browser 200 and sends instructions p1x to the instruction-receiving system C1 specified by the specification information Xx. The contents data dx is a program file in which instructions for causing the Web browser 200 to execute prescribed processing are contained, and the processing instructions Px contained in the contents data dx are executed on the browser 200 as processing for accessing the instruction-receiving system c1 and reading the contents therein.

When receiving the instructions p1x from the instruction memory portion D30, the instruction-receiving means C1 causes the instruction execution means 310 to acquire instructions p2x corresponding to the instructions p1x from the instruction memory portion D30 and execute the instructions p2x.

The instructions to be executed are not limited insofar as the instruction-receiving system C1 can execute the instructions. For example, the instructions may be those only the instruction-receiving system C1 can execute or those for controlling other equipment connected to the instruction-receiving system C1. Otherwise, the instructions may be those for sending processing results to the Web browser 200, those for sending the processing results to a specified destination or those for not sending the processing results to either the Web browser or specified destination. Concrete examples thereof will be described hereinafter.

### (Example 1: File List Request)

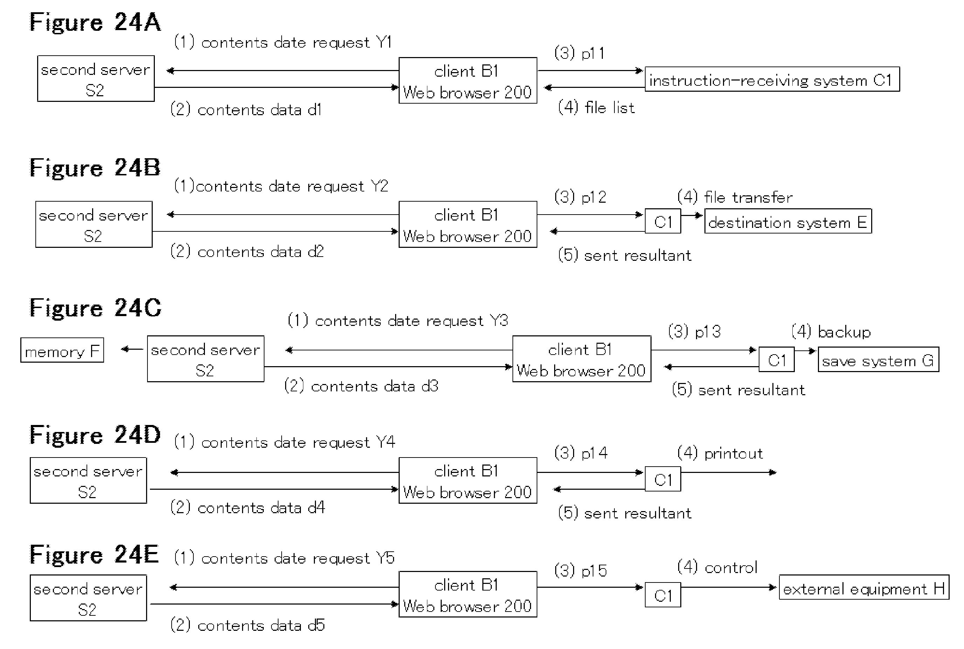

Figure 24A is an explanatory view illustrating a file list request. When a user specifies specification information Xx and a directory of a forwarding destination as a processing request Y1 and request a file list of the directory, the processing request is sent from the Web browser 200 ((1) in the figure). The second server S2 having receiving it acquires contents data d1 corresponding to the processing request Y1 of the file list. The contents data d1 contains processing instructions P1 for sending instructions p11 for requesting the file list to the instruction-receiving system specified by the specification information Xx. Furthermore, the second server S2 adds additive information Z1 to the instructions p11. The contents data d1 is sent from the send means 113 ((2) in the figure). The additive information includes information Z1 for specifying a directory of a reference destination. When receiving the contents data d1, the Web browser 200 executes the processing instructions P1. As a result, the instructions p11 added with the additive information Z1 are sent to the instruction-receiving system C1 specified by the specification information Xx ((3) in the figure). In the instruction-receiving system C1, the instruction execution means 310 selects instructions p21 corresponding to the instructions 11 and executes the instructions p21 having the additive information Z1 incorporated therein. The instructions p21 are instructions for preparing a file list of the directory specified by the additive information Z1 and returning it to the Web browser. As a result, the file list is prepared on the instruction-receiving system C1 and returned to the Web browser 200 ((4) in the figure).

### (Example 2: File Transfer Request)

Figure 24B is an explanatory view illustrating a file transfer request. When a user has entered the specification information Xx and information for specifying a file and forwarding destination and further entered a processing request Y2 to transfer the file to a forwarding destination system *E*, the processing request Y2 is sent from the Web browser ((1) in the figure). The second server S2 having received it acquires contents data d2 corresponding to the processing request Y2 in the forwarding destination. The contents data d2 contains processing instructions P2 for sending instructions p12 for requesting file transfer to the instruction-receiving system specified by the specification information Xx. The second server S2 adds additive information Z2 and Z3 to the contents data d2. The additive information Z2 is information for specifying a file, the additive information Z3 is information for specifying a forwarding destination, and these pieces of information are acquired from the received processing request Y2. The contents data d2 is sent by the send means 113 ((2) in the figure). When receiving the contents data d2, the Web browser 200 executes processing in accordance therewith, adds the additive information Z2 and Z3 to the instructions p12, and sends the resultant to the instruction-receiving system C1 specified by the specification information Xx ((3) in the figure). The instruction execution means 310 in the instruction-receiving system C1 selects instructions p22 corresponding to the instructions p12 from the instruction memory portion d30 and executes the instructions p22 having the additive information Z2 and Z3 incorporated therein. The instructions p22 are instructions for transferring a file specified by the additive information Z2 to the forwarding destination system *E* specified by the additive information Z3 and sending a resultant value to the Web browser. As a result, the instruction-receiving system C1 transfers the file to the forwarding destination system ((4) in the figure). As a consequence, a transfer success/unsuccess signal is sent to the Web browser 200 ((5) in the figure).

### (Example 3: Backup Request)

Figure 24C is an explanatory view illustrating a backup request. The Web browser 200 sends the specification information Xx and a processing request Y3 to confirm whether an updated or added file exists in a prescribed memory *F* to the second server S2 on the basis of triggers periodically produced on the background thereof. Incidentally, the prescribed memory *F* is specified in advance by the user and stored in the Web browser 200. When having receiving it, the second server S2 confirms whether the updated or added file exists and, when the existence has been confirmed, acquires contents data d3 corresponding to the processing request Y3. The unedited contents data d3 contains processing instructions P3 for sending instructions p13 for saving the file in a destination to save to the instruction-receiving system specified by the specification information Xx. The second server S2 adds additive information Z4 and Z5 to the contents data d3. The additive information Z4 is information for specifying the destination to save (directory for backup, for example), and the additive information Z5 is a file to be saved or information for specifying the file. Incidentally, the destination to save that is the additive information Z4 is specified by the user or determined in accordance with the prescribed rules set in advance. The contents data d3 are sent to the client B1 ((2) in the figure). When receiving the contents data d3, the Web browser 200 executes processing in accordance therewith, sends save instructions p13 added with the additive information Z4 and Z5 to the instruction-receiving system C1 specified by the specification information Xx ((3) in the figure). The instruction execution means 310 in the instruction-receiving system C1 selects instructions p23 corresponding to the instructions p13 from the instruction memory portion D30 and executes the instructions p23 having the additive information Z4 and Z5 incorporated therein. The instructions p 23 are instructions for saving a file specified by the additive information Z5 in a destination-to-save system G specified by the additive information Z4 and sending a resultant value to the Web browser 200. As a result, the file updated or added by the memory F is saved in the destination-to-save system G, and backed up ((4) in the figure). In addition, a backup success/unsuccess signal is sent to the Web browser 200 as the resultant value ((5) in the figure).

### (Example 4: Printout Request)

Figure 24D is an explanatory view illustrating a printout request. When a user has entered specification information Xx and a printout request for a file to be specified on the Web browser 200, the Web browser 200 sends a processing request Y4 thereof ((1) in the figure). When receiving the processing request Y4, the Web server 100 acquires contents data d4 corresponding to the processing request Y4. The contents data d4 includes processing instructions P4 for sending instructions for requesting printout the file to the instruction-receiving system specified by the specification information Xx. The second server S2 adds additive information Z6 to the instructions 14. The additive information Z6 is a file specified by the user or information for specifying the file. The edited contents data d4 is sent to the client B1 ((2) in the figure). When receiving the contents data d4, the Web browser 200 executes processing in accordance therewith, adds the additive information Z6 to the instructions p14, and sends the resultant to the instruction-receiving system C1 specified by the specification information Xx ((3) in the figure). The instruction execution means 310 in the instruction-receiving system C1 selects instructions p24 corresponding to the instructions p14 from the instruction memory portion D30 and executes the instructions p24 having the additional information Z6 incorporated therein. The instructions p24 are instructions for causing the instruction-receiving system C1 to print out a file specified by the additive information Z6 with a printer and execute processing for returning a resultant value to the Web browser 200. As a result, the file is printed out on the instruction-receiving system C1 ((4) in the figure) and a printout success/unsuccess signal is sent to the Web browser 200 as the resultant value ((5) in the figure).

### (Control relative to External Equipment)

Figure 24E is an explanatory view illustrating a control relative to external equipment. The external equipment is connected to the instruction-receiving system C1 and can be controlled by instructions from the instruction-receiving system C1. When a user enters the specification information Xx and control instructions relative to the external equipment *H*, the Web browser 200 sends a processing request Y5 thereof ((1) in the figure). When receiving the processing request Y5, the second server S2 acquires contents data d5 corresponding to the processing request Y5. The contents data d5 contains processing instructions for sending prescribed control instructions p15 relative to the external equipment *H* to the instruction-receiving system specified by optional specification information *X*. The second server S2 adds additive information Z7 to the control instructions p15. The contents data d5 is sent to the client B1 ((2) in the figure). The additive information Z7 is information for specifying the external equipment *H* the user has entered. When receiving the contents data d5, the Web browser 200 executes processing in accordance therewith and sends the control instructions p15 having the additive information Z7 incorporated therein to the instruction-receiving system C1 specified by the specification information Xx ((3) in the figure). The instruction memory portion D30 in the instruction-receiving system C1 selects instructions p25 corresponding to the control instructions p15 from the instruction memory portion D30 and executes the instructions p25 having the additive information Z7 incorporated therein. The instructions p25 are prescribed control instructions relative to the specified external equipment *H*. As a result, the specified external equipment H is controlled based on the control instructions p15 ((4) in the figure).

Incidentally the processing instructions of the contents data dx may be described in the Java (registered trademark) script and under the HTML standards or other standards.

According to the Web system SA1, since the intended processing instructions Px relative to the intended instruction-receiving system C1 are contained in the content data dx from the second server S2, the client B1 can send the intended instructions to the instruction-receiving system C1 merely when receiving the contents data d2x thereof. Therefore, it becomes possible to control the instruction-receiving system via the Web browser 200 from the second server S2 even in an environment in which a direct control from the second server S2 to the instruction-receiving system C1 cannot be made, thereby enabling the client B1 to eliminate the use of an application for the instruction-receiving system c1 even in the aforementioned connection environment.

Then, the contents data dx is a program file in which the instructions for causing the Web browser 200 to execute the prescribed processing are described, and the processing instructions Px contained in the contents data dx are executed on the Web browser 200 as processing for accessing the instruction-receiving system and reading the contents therein. That is to say, the client B1, when having the Web browser 200 mounted thereon, can cause the Web browser 200 to analyze the contents data dx and secondarily request the contents in the instruction-receiving system. This means that the contents-requesting processing is substantially transmitted as a command signal relative to the instruction-receiving system. Briefly, if the client is merely provided with functions like contents analysis and request in the browsing processing of the Web browser per se, it is possible to send a command to the instruction-receiving system C1. With this, the client B1 need not be provided with a dedicated application and, only by connecting the client from various kinds of electronic equipment each having a Web browser mounted thereon to the server, processing instructions can be executed relative to the instruction-receiving system C1.

Furthermore, also in the case of transferring an intended file from the instruction-receiving system c1 to an intended forwarding destination, since the contents data dx contains the corresponding transfer instructions, when receiving the contents data dx, the Web browser sends the transfer instructions to the instruction-receiving system C1. As a result, the file is directly transferred from the instruction-receiving system C1 to the intended forwarding destination and, since the operation of transferring the file from the client to the forwarding destination after the user moves the file from the instruction-receiving system C1 to the client B1 is made unnecessary, the transfer operation can easily be made.

### (Fifth Embodiment)

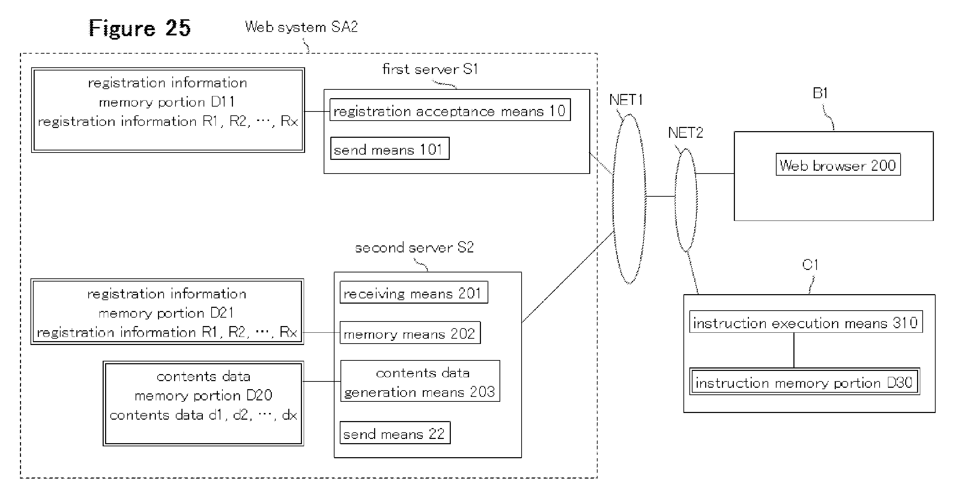

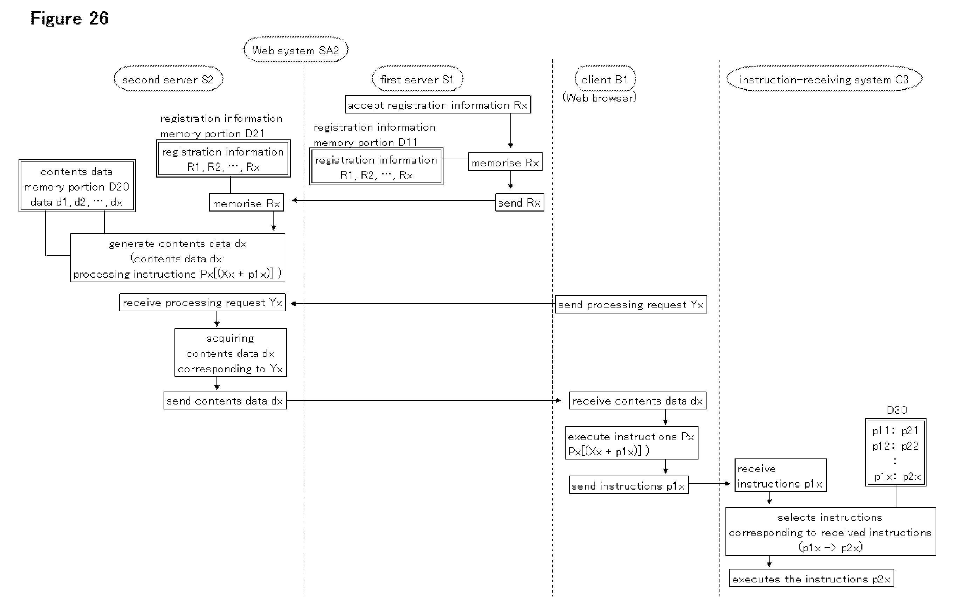

Figure 25 is a function configuration diagram illustrating the fifth embodiment of the present invention and Figure 26 is a flowchart illustrating the performance of the present embodiment. The same component parts as in the fourth embodiment are given the same reference symbols and numerals, the description thereof is omitted and only different points will be described hereinafter.

A Web system SA2 is equipped with a first server S1 and a second server S2, and the second server S2 generates contents data. The first server S1 sends received registration information Rx from the send means 101 to the second server S2. When receiving means 201 of the second server S2 has received the registration information Rx, the registration information is stored in a registration information memory portion D21 by memory means 202 and, at the same time, contents data dx are generated by contents data generation means 203.

Incidentally, in the above example, contents data dx are generated every time registration information Rx is received. However, this is not limitative. It is raised as another example that contents data dx may be generated every time a processing request Yx is received. That is to say, procedures adopted when the processing request Yx has been received comprise the steps of acquiring registration information Rx corresponding to the processing request Yx from the registration information memory portion D21, generating contents data dx using the registration information Rx and sending the contents data to the client B1.

Incidentally, though the second server S2 in the fourth and fifth embodiments can be connected to the network NET1, it may be connected to a DMZ region of the network NET2. Also in this case, the instruction-receiving system C1 incapable of being controlled directly from the second server S2 can be operated and use of a dedicated application can be eliminated.

Furthermore, since the second server S2 can be connected to the network NET2, it may be placed in an environment in which the instruction-receiving system C1 can be connected directly thereto. Also in this case, it is effective that the client B1 does not need use of a dedicated application.

### (Sixth Embodiment)

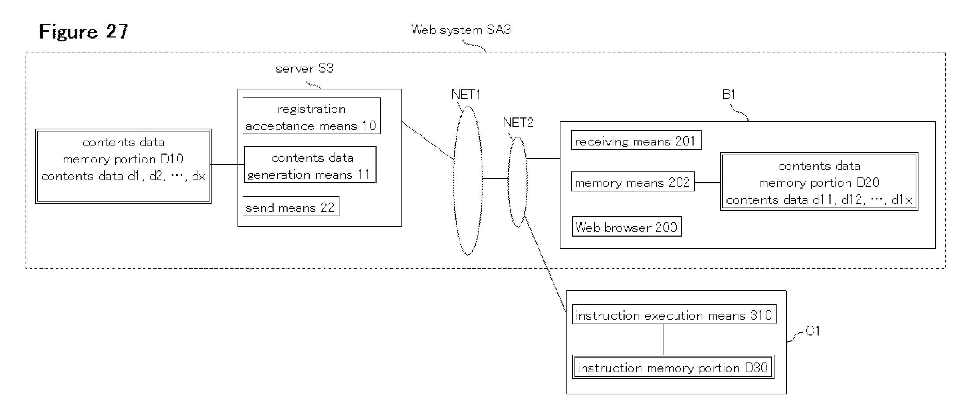

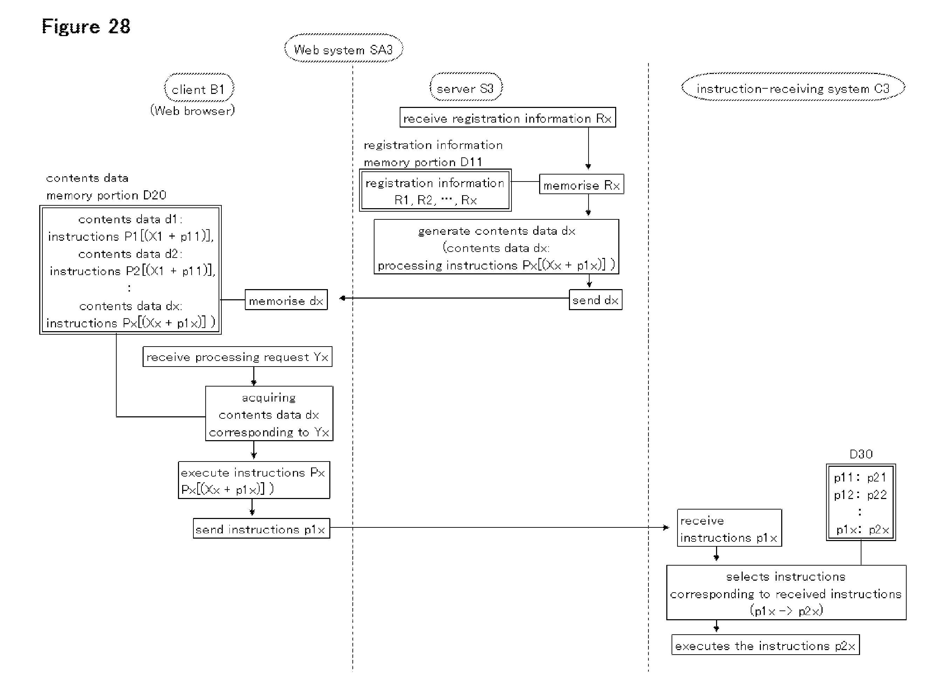

Figure 27 is a function configuration diagram illustrating the sixth embodiment of the present invention and Figure 28 is a flowchart illustrating the performance of the present embodiment. The same component parts as in the fourth embodiment are given the same reference symbols and numerals, the description thereof is omitted and only different points will be described hereinafter.

A Web system SA3 is equipped with a server S3 and a client B1. Contents data dx generated by the server S3 are sent from send means 112 to the client B1 in accordance with a request from the client B1. When the receiving means 201 has received the contents data dx from, the client B1 causes the contents data dx to be stored in a contents data memory portion D200.

When having received the processing request Yx from the user, the Web browser 200 acquires contents data Rx corresponding to the processing request Yx and executes processing instructions Px. Incidentally, the processing request Yx used here is a URL for specifying the contents data dx or the like.

### (Seventh Embodiment)

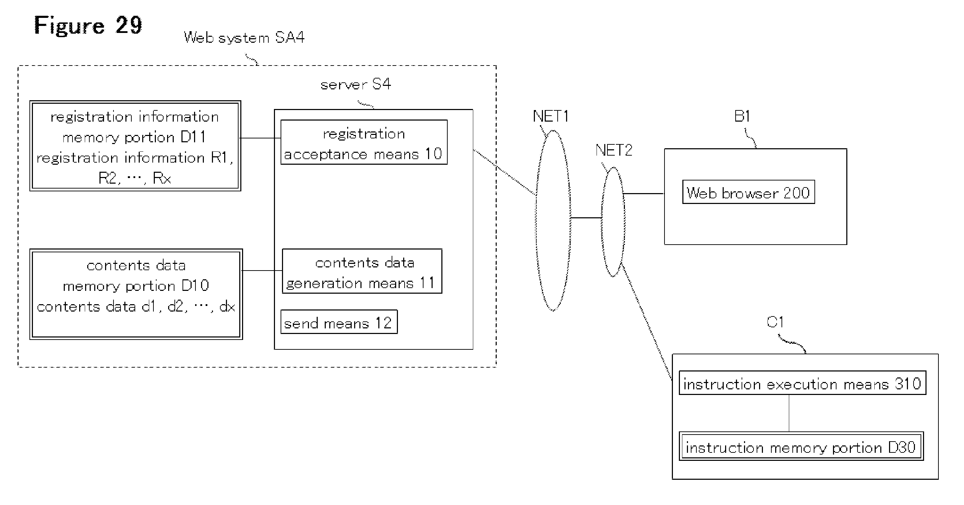

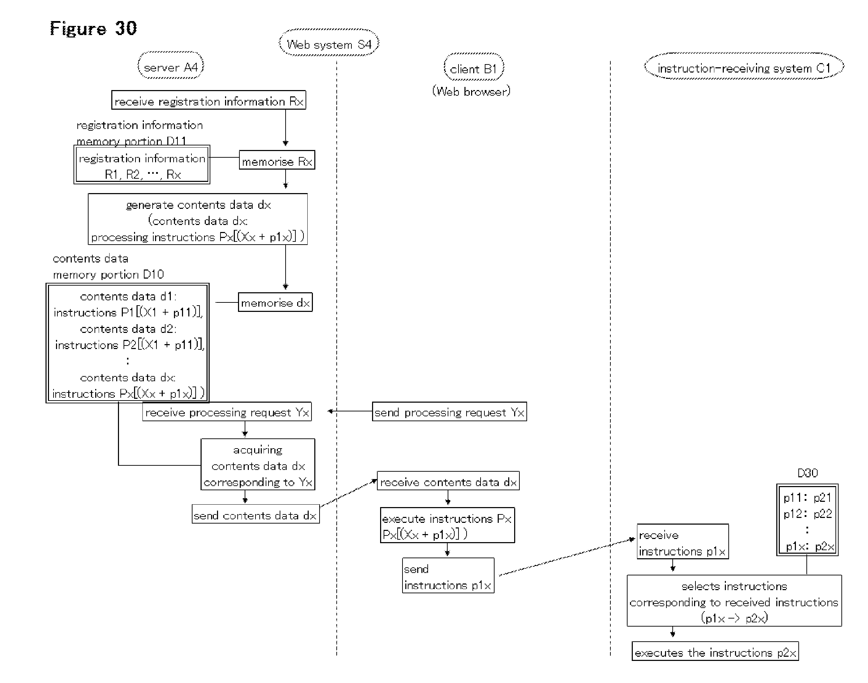

Figure 29 is a function configuration diagram illustrating the seventh embodiment of the present invention and Figure 30 is a flowchart illustrating the performance of the present embodiment. A Web system S4 is equipped with a first server S4.

The first server S4 has all functions from the reception of registration information Rx to the send of contents data dx to a client B1. When the first server S4 has received the registration information Rx, the registration information Rx is stored in a registration information memory portion D11, and contents data dx are generated by contents data generation means 11. The generated contents data dx are stored in a contents data memory portion D10 and sent to the client B1 in accordance with a processing request Yx from the client B1. As a result, the client B1 does not necessitate use of an application dedicated to the instruction-receiving system C1. Incidentally, contents data dx per processing request Yx from the client B1 may be generated in the same manner as in the sixth embodiment.

### (Working Example 1)

The present working example will be described citing as an example a case where instruction-receiving system C1 has data for graph display, instructions p1x is a request for reading the data for graph display and contents data dx include an application for graphically displaying the data for graph display.

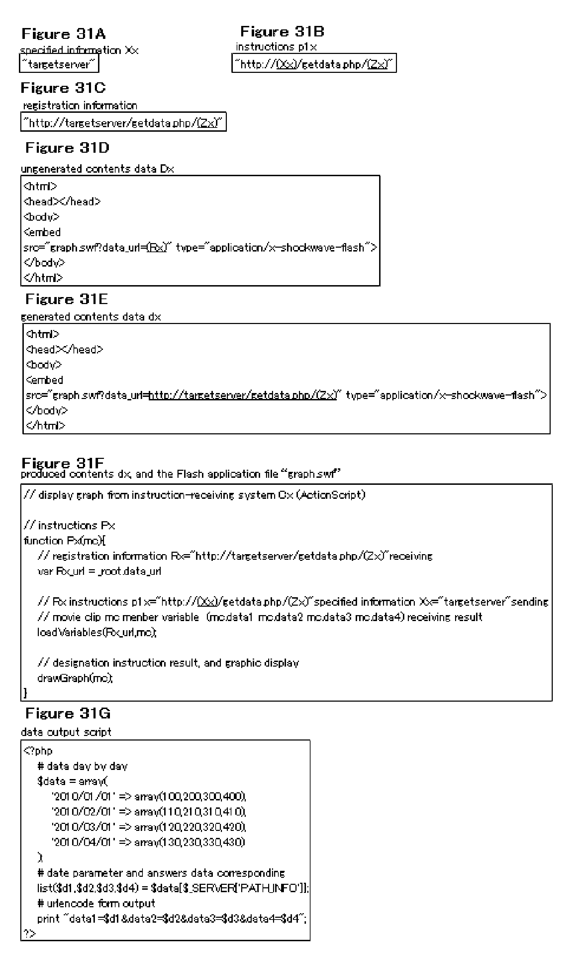

Figure 31 shows data examples and program-mounting examples illustrating Working Example 1 of the present invention. Figure 31A shows specification information Xx corresponding to a server name (host name) of the instruction-receiving system C1, Figure 31B shows processing instructions p1x sent to the instruction-receiving system C1, and Figure 31C shows registration information Rx including data of the Xx and p1x.

Pieces of registration information Rx are registered and accumulated in S1 in the fourth and fifth embodiments, S3 in the sixth embodiment and S4 in the seventh embodiment.

Figure 31D shows contents unproduced in the contents production means and, by inserting registration information Rx into a specified place of the unproduced contents Dx, produced contents dx shown in Figure 31E are produced.

Figure 31F shows a script in a Flash application file incidental to the produced contents dx in Figure 31A in replying to a contents request Yx from the client B1. To be specific, after the server receives the contents request Yx, it replies and sends the produced contents dx to the client B1, and the client B1 interprets an src attribute "graph.swf?data_url=http://targetserver/getdata.php/(Zr)" of an <embed> tag in the received produced contents dx, and the Flash application file "graph.swf" is requested as a secondary request by the server. In addition, (Zx) in the src attribute corresponds to the additive information Z1 to Z7 and, by inserting parameter values specified by GET or POST in the contents request Yx and answering the resultant, parameters specified by the client B1 are included in the registration information Rx in the dx. In the present working example, a date is specified as the Zx. The Flash file "graph.swf" received on the browser of the client B1 is executed by Flash Player functioning as plug-in of the browser. The Flash Player executes the "graph.swf" and, at the same time, acquires registration information Rx "data_url=http://targetserver/getdata.php/(Zx)" described in the src attribute and stores it in an internal variable "_root.data_url".

Graph data acquisition instructions p1x are sent to the instruction-receiving system C1 on the basis of Rx information stored in the internal variable "_root.data_url". On this occasion, since the additive information Zx is contained in the registration information Rx, the additive information Zx is also sent as p1x at the same time. As a result, the instruction-receiving system C1 receives the processing instructions p1x and Zx as a parameter value.

Figure 31G shows a php script in the instruction-receiving system C1 executed when the processing instructions p1x sent from the client B1 has been received. The present script acquires a value of the additive information Zx as a date parameter and answers data corresponding thereto.

After a resultant value of the processing instructions p1x is received, processing for graphically displaying on the browser the received data in the script shown in Figure 31F is executed.

By following the above processing procedure, it is possible to display date data specified by the browser of the client B1 by the use of the graph display application on the published server. In addition, the effect of receiving the data to be displayed from the instruction-receiving system C1 existing in an environment in which the data cannot directly be accessed from the published server, peculiar to the present invention, is produced.

### (Working Example 2)

Present Working Example 2 will be described citing as an example a case here the instruction-receiving system has bulletin board display data, instructions p1x are a request for reading the data for bulletin board display, and the contents data includes an application for displaying the data for bulletin board on a bulletin board.

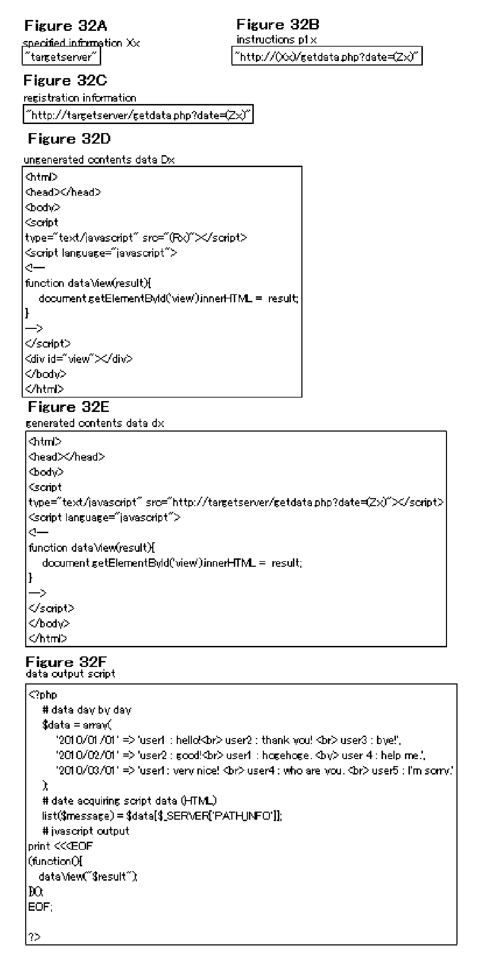

Figure 32 includes a data example and a program-mounting example illustrating Working Example 2.

Since Figure 32A to Figure 32C illustrate the same contents as in Working Example 1, the description thereof is omitted. Though Figure 32D shows the same unproduced contents as in Working Example 1, the place to be replaced is not the <embed> tag, but the <script> tag. The src attribute of the <script> tag is replaced by the registration information (Rx) to induce the produced contents dx shown in Figure 32E.

When the produced contents dx shown in Figure 32E are sent in reply to the contents request Yx from the client B1, the client B1 interprets the <script> tag in the browser dx and makes a secondary request relative to the registration information (Rx) http://targetserver/getdata.php?date=(Zx) in the src attributes. As a result, the processing instructions p1x in the registration information (Rx) are sent to the instruction-receiving system C1.

The instruction-receiving system C1 having received the processing instructions p1x executes the data output script, extracts data corresponding to the date specified by the additive information Zx and reply it in the Java (registered trademark) script format.

The client B1 receives replied results of the instruction-receiving system C1 and write the received data in the display region to thereby display bulletin board information on the browser.

By following the above processing procedure, it is possible to display bulletin board information corresponding to the date (Zx) specified by the browser B1 on the contents received from the published server. In addition, the effect of receiving the data to be displayed from the instruction-receiving system C1 existing in an environment in which the data cannot directly be accessed from the published server, peculiar to the present invention, is produced.

Incidentally, the p1x is sent to the instruction-receiving system C1 in Working Examples 1 and 2 through replacement of the <embed> tag or <script> tag as a method for producing the produced contents dx. However, this is not limitative. An <img>, <iframe>, <object> or <style> tag may be used. The registration information Rx may be inserted as data other than html data into the Java script file, Flash (swf) file, XML file or text file to induce the produced contents dx.

Incidentally, the present invention is not limited to the embodiments and examples described above and may appropriately be modified within the scope of the invention. The instruction-receiving system is not limited to that equipped with a Web server, but may be any one insofar as it is equipped with a computer system, such as printer, fax, scanner or memory and can execute instructions from a client. Though the instruction-receiving system is connected via a local network in the aforementioned embodiments, it may be connected directly to a client with a USB, serial cable or the like. Connection among the Web system, client and instruction-receiving system is not limited to those described in the aforementioned embodiments, any connection may be adopted such that all the components are connected to one another with a local area network, different network segment band or the like. However, the environment is limited to that in which a direct control from the client to the instruction-receiving system can be made. Furthermore, the effect of the present invention that the instruction-receiving system is controlled from the Web system via the client in an environment in which the instruction-receiving system cannot directly be controlled from the Web system is particularly achieved. In addition, the instruction request sent from the client may be sent by a function of a browser *per se,* such as HTML or Java (registered trademark) script, a program operable on the browser, such as plug-in including Flash (registered trademark), Java (registered trademark) and Silverlight (registered trademark), external program initiated from the browser, program for monitoring the browser or any other program capable of cooperating with the browser. The contents of a processing request may be a request for requesting the instruction-receiving system to execute processing, a request for requesting the Web system or other systems to execute processing, and the processing contents are not limited.

## Claims

1. A Web system provided with a Web server connectable to a Web browser of a client via a network and adapted to send contents data to the Web browser in accordance with a processing request from the Web browser;
said contents data being a program file in which instructions for causing the Web browser to execute prescribed processing are described;
said Web server comprising:
receiving means having a function to receive specification information for specifying a instruction-receiving system from the Web browser and a function to receive a processing request from the Web browser,
acquisition means having a function to acquire contents data corresponding to the processing request from a contents data memory portion,
edit means having a function to edit the contents data into contents data containing processing instructions to send instructions corresponding to the processing request to the instruction-receiving system specified by the specification information, and
send means for sending the contents data to the Web browser,
wherein the processing instructions contained in the contents data edited by the edit means are executed on the Web browser as processing of accessing the instruction-receiving system and reading contents.

2. A Web system according to claim 1, wherein the processing request is a processing request requesting a file list in a specified directory, and the edit means edits the contents data acquired by the acquisition means into the contents data containing the processing instructions to be sent to the instruction-receiving system in which the instructions to request the file list in the specified information are specified by the specified information.

3. A Web system according to claim 1, wherein the processing request is a processing request for requesting transfer of a specified file to a specified forwarding address, and the edit means edits the contents data acquired by the acquisition means into contents data containing processing instructions to send instructions to request the transfer of the specified file to the specified forwarding address to the instruction-receiving system specified by the specification information.

4. A web system according to any one of claims 1, wherein the Web system is provided with a license information memory portion in which a user identifier, specification information specifying the instruction-receiving system and an identifier for authentication capable of uniquely determining the instruction-receiving system specified by the specification information are stored as being mapped, the receiving means has a function to receive the user identifier from the Web browser and a function to receive an authentication request from the Web browser, the acquisition means has a function to acquire contents data corresponding to the authentication request from the contents data memory portion, and the edit means preferably has a function to acquire specification information corresponding to the user identifier and an identifier for authentication from the license information memory portion and to edit the contents data acquired by the acquisition means into contents data containing processing instructions to send authentication instructions using the identifier for authentication to the instruction-receiving system specified by the specification information.

5. An instruction-receiving system according to claim 1, wherein the instruction-receiving system is provided with an instruction memory portion in which instructions corresponding to instructions received from the Web browser are stored and instruction execution means for selecting, when having received instructions corresponding to the processing request from the Web browser, instructions corresponding to the instructions from the instruction memory portion and executing the selected instructions.

6. An instruction-receiving system according to claim 4, wherein the instruction-receiving system is provided with an identifier-for-authentication memory portion in which the identifier for authentication is stored and crosscheck means for crosschecking, when having received authentication instructions using the identifier for authentication from the Web browser, the received identifier for authentication and an identifier for authentication in the identifier-for-authentication memory portion.

7. A Web server according to any one of claims 1, wherein the Web server is provided with a license information memory portion in which a user identifier and specification information specifying the instruction-receiving system are stored as being mapped, a session identifier production memory means having a session identifier memory portion in which a session identifier uniquely produced relative to a session with the Web browser is stored and crosscheck means for crosschecking, when having received the session identifier from the instruction-receiving system, the session identifier and the session identifier stored in the session identifier memory portion; the receiving means has a function to receive the user identifier from the Web browser and a function to receive the authentication request from the Web browser; the acquisition means has a function to acquire contents data corresponding to the authentication request from the contents data memory portion; and the edit means acquires specification information corresponding to the user identifier from the license information memory portion and edits the contents data acquired from the acquisition means into contents data that contains procession instructions to send, to the instruction-receiving system specified by the specification information, a session identifier produced by the session identifier production memory means and return instructions to return the session identifier to the Web server.

8. A contents data providing method for causing a Web server connectable to a Web browser of a client via a network to send contents data in accordance with a processing request from the Web browser;
said contents data being a program file in which instructions for causing the Web browser to execute prescribed processing are described;
said Web server comprising:
a step of receiving specification information for specifying an instruction-receiving system from the Web browser,
a step of receiving a processing request from the Web browser,
an acquisition step of acquiring contents data corresponding to the processing request from a contents data memory portion,
an edit step of editing the contents data into contents data containing processing instructions to send instructions corresponding to the processing request to the instruction-receiving system specified by the specification information, and
a send step of sending the contents data to the Web browser,
wherein the processing instructions contained in the contents data edited at the edit step are executed on the Web browser as processing of accessing the instruction-receiving system and reading contents.

9. A Web system comprising a client provided with a Web browser, a first server and a second server capable of being in communication with the first server and the client;
said first server comprising registration acceptance means for accepting registration of registration information including specification information for specifying an instruction-receiving system, contents data generation means for generating contents data containing processing instructions to send instructions to the instruction-receiving system specified by the specification information contained in the registration information and send means for sending the contents data generated by the contents data generation means to the second server;
said second server comprises a contents data memory portion for storing the contents data received from the first server and send means for sending the contents data to the client on a request from the client;
said contents data being a program file in which instructions for causing the Web browser to execute prescribed processing are described; and
said processing instructions contained in the contents data being executed on the Web browser as processing for accessing the instruction-receiving system and reading contents in the system.

10. A Web system comprising a client provided with a Web browser, a first server and a second server capable of being in communication with the first server and the client; the first server comprising registration acceptance means for accepting registration of registration information including specification information for specifying an instruction-receiving system and send means for sending the registration information accepted by the registration acceptance means to the second server; the second server comprising a registration information memory portion for storing the registration information received from the first server, contents data generation means for generating contents data containing processing instructions to send instructions to the instruction-receiving system specified by the specification information included in the registration information and send means for sending the contents data to the client on a request from the client; the contents data being a program file in which instructions for causing the Web browser to execute prescribed processing are described; and the processing instructions contained in the contents data being executed on the Web browser as processing for accessing the instruction-receiving system and reading contents in the system.

11. A Web system comprising a server and a client capable of being in communication with the server; the server comprising registration acceptance means for accepting registration of registration information including specification information for specifying an instruction-receiving system, contents data generation means for generating contents data containing processing instructions to send instructions to the instruction-receiving system specified by the specification information included in the registration information and send means for sending the contents data generated by the contents data generation means to the client; the client comprising a contents data memory portion for storing the contents data received from the server and a Web browser; the contents data being a program file in which instructions for causing the Web browser to execute prescribed processing are described; and the processing instructions contained in the contents data being executed on the Web browser as processing for accessing the instruction-receiving system and reading contents in the system.

12. A Web system according to any one of claims 9 to 11, wherein the Web system comprising a server capable of being in communication with a client provided with a Web browser; the server comprising registration acceptance means for accepting specification information for specifying an instruction-receiving system and registration information including instructions to be sent to the instruction-receiving system, contents data generation means for generating contents data containing processing instructions to send the instructions to the instruction-receiving system specified by the specification information contained in the registration information and send means for sending the contents data to the client on a request from the client; the contents data being a program file in which instructions for causing the Web browser to execute prescribed processing are described; and the processing instructions contained in the contents data being executed on the Web browser as processing for accessing the instruction-receiving system and reading contents in the system.

13. A Web system comprising a server capable of being in communication with a client provided with a Web browser; the server comprising registration acceptance means for accepting registration of specification information for specifying an instruction-receiving system and registration information containing instructions relative to the instruction-receiving system, contents data generation means for generating contents data containing processing instructions to send the instructions to the instruction-receiving system specified by the specification information contained in the registration information and send means for sending the contents data to the client on a request from the client; the contents data being a program file in which instructions for causing the Web browser to execute prescribed processing are described; and the processing instructions contained in the contents data being executed on the Web browser as processing for accessing the instruction-receiving system and reading contents therein.

14. A Web system according to any one of claims 9 to 13, wherein the instruction-receiving system has data for graph display, the instructions comprise a reading request of the data for graph display, and the contents data includes an application for graphically displaying the data for graph display.

15. A Web system according to any one of claims 9 to 13, wherein the instruction-receiving system has bulletin board display data, the instructions comprise a reading request of the bulletin board display data, and the contents data includes an application for displaying the bulletin board display data on a bulletin board.
